# EUROPÄISCHE PATENTSCHRIFT

(11) **EP 1 658 452 B1**
(45) Veröffentlichungstag und Bekanntmachung des Hinweises auf die Patenterteilung: **02.03.2011**
(21) Anmeldenummer: 04763983.6
(22) Anmeldetag: 11.08.2004
(51) Int. Cl.: F16H 3/093

(54) **DOPPELKUPPLUNGSGETRIEBE IN WINDUNGSANORDNUNG**
DOUBLE CLUTCH TRANSMISSION IN A WINDING ARRANGEMENT
BOITE DE VITESSES A DOUBLE EMBRAYAGE A DISPOSITION ENROULEE

(30) Priorität: 27.08.2003 DE 10339758
(43) Veröffentlichungstag der Anmeldung: 24.05.2006
(73) Patentinhaber: Daimler AG, 70327 Stuttgart (DE)
(72) Erfinder: GITT, Carsten, 70327 Stuttgart (DE)
(74) Vertreter: JENSEN & SON
(86) Internationale Anmeldenummer: PCT/EP2004/008976
(87) Internationale Veröffentlichungsnummer: WO 2005/021999

(56) Entgegenhaltungen:
- AT-B- 190 394
- DE-A- 3 544 415
- DE-A- 10 060 699
- DE-A- 10 325 647
- GB-A- 2 103 317

## Beschreibung

Die Erfindung betrifft gemäß dem Oberbegriff des unabhängigen Patentanspruchs 1 ein Doppelkupplungsgetriebe in Windungsanordnung, welches zwei koaxial zueinander angeordnete Vorgelegewellen aufweist. Ferner betrifft die Erfindung ein Verfahren gemäß dem unabhängigen Verfahrensanspruch 23.

Ein solches Doppelkupplungsgetriebe ist bereits aus der Veröffentlichung von Tenberge, P.: "Doppelkupplungsgetriebe in Windungsanordnung", VDI-Seminar Nr. 31 03 01 "Stufenlose Fahrzeuggetriebe", Stuttgart, 2001, bekannt.

Die nicht vorveröffentlichte DE 103 25 647 A1 zeigt ebenfalls bereits ein Doppelkupplungsgetriebe in Windungsanordnung. Bei diesem sind die Vorgelegewellen allerdings parallel zueinander angeordnet.

Ferner sind aus der EP 0 883 785 B1, der DE 101 02 028 A1, der WO 00/39484, der US 6,250,171 B1 der DE 199 39 334 A1, der DE 198 21 164 A1, der DE 101 08 881 A1 und der US 6,427,547 B1 Doppelkupplungsgetriebe bekannt.

Die bekannten Doppelkupplungsgetriebe habe je Veröffentlichung verschiedene Nachteile. So weisen einige Doppelkupplungsgetriebekonzepte eine relativ große Baulänge auf. Ferner ist zumeist nur ein Rückwärtsgang verwirklicht.

Aus der DE 35 44 415 A ist ein Doppelkupplungsgetriebe bekannt, bei dem mit n Radzügen und n+1 synchronisierbaren Schaltkupplungen n-1 mal zwei Vorwärtsgänge und mindestens zwei Rückwärtsgänge erzielt werden.

Die gattungsgemäße GB-A-2 103 317 zeigt ein Doppelkupplungsgetriebe in Windungsanordnung, welches zwei koaxial zueinander angeordnete Vorgelegewellen aufweist, wobei axial vom Antrieb zum Abtrieb gesehen mehrere Zahnradebenen einander folgen, wobei in zumindest einem Gang zumindest ein über mehr als zwei Zahnradebenen verlaufender Leistungsfluss im einem Teilbereich axial vom Abtrieb in Richtung auf den Antrieb verläuft.

Aufgabe des unabhängigen Patentanspruchs 1 ist es, ein axial kurzes zugkraftunterbrechungsfreies Doppelkupplungsgetriebe mit einer relativ hohen Anzahl von Gängen zu schaffen.

Dabei ist das Doppelkupplungsgetriebe gemäß dem Patentanspruch 1 infolge der Anzahl von Vorwärts- und Rückwärtsgängen in besonders vorteilhafter Weise insbesondere für Nutzfahrzeuge geeignet.

Im folgenden wird ein großes Übersetzungsverhältnis auch als kurzer Gang und ein kleines Übersetzungsverhältnis auch als langer Gang bezeichnet.

Das Doppelkupplungsgetriebe weist sieben Vorwärtsgänge auf. In einer besonders vorteilhaften Ausgestaltung der Erfindung ist der erste Vorwärtsgang als gewundener Getriebegang ausgeführt ist. Durch diese Ausgestaltung wird das folgende Dilemma umgangen, welches auftritt, wenn der erste und höchste Vorwärtsgang über dieselbe Eingangsübersetzung verwirklicht werden. Ohne gewundenen ersten Vorwärtsgang bestünde eine erste Möglichkeit zur Getriebeauslegung darin, die betreffende Eingangsübersetzung bzw. Getriebekonstante in nachteilhafter Weise sehr kurz auszulegen, damit insgesamt ein ausreichend kurzer erster Vorwärtsgang zustande kommt. Nachteilhafterweise müsste dann die zweite Übersetzung des höchsten Vorwärtsganges sehr lang ausgelegt werden, damit eine ausreichende Spreizung zustande kommt bzw. dieser höchste Vorwärtsgang insgesamt ausreichend lang übersetzt ist. Durch die kurze Eingangsübersetzung bzw. Getriebekonstante wird ferner in nachteilhafter Weise das Drehmoment bereits mit dieser ersten Übersetzungsstufe stark erhöht, so dass alle im Kraftfluss nachfolgenden Bauteile hoch belastet werden. Wird im Gegensatz zur ersten Möglichkeit die betreffende Eingangsübersetzung relativ lang ausgelegt, so dass die zweite Übersetzungsstufe des höchsten Vorwärtsganges nicht extrem lang ausgelegt werden muss, so ist es allerdings erforderlich, die zweite Übersetzungsstufe des ersten Vorwärtsganges extrem kurz auszulegen, damit insgesamt ein ausreichend kurz übersetzter erster Vorwärtsgang zustande kommt.

Da in einer vorteilhaften Ausgestaltung der erste und siebente Vorwärtsgang beide zur Gruppe der ungeraden Gänge gehören, können sie im Leistungsfluss über dieselbe Eingangsübersetzung bzw. Getriebekonstante geführt werden. Das vorgenannte Dilemma kann durch die Ausnutzung zweier zusätzlicher Übersetzungssstufen im ersten Vorwärtsgang umgangen werden, wenn die besagten zusätzlichen Übersetzungsstufen insgesamt eine Übersetzung ins Langsame ergeben. Es kann dann mit einer verhältnismäßig langen Eingangsübersetzung bzw. Getriebekonstanten gearbeitet werden, so dass die zweite Verzahnungsstufe des siebten Ganges nicht extrem lang gewählt werden muss und trotzdem ein ausreichend kurzer erster Vorwärtsgang realisiert werden kann. Außerdem werden alle im Kraftfluss hinter der Eingangsübersetzung für die ungeraden Vorwärtsgänge liegenden Bauteile geringer belastet, als wenn diese kürzer ausgelegt werden würde als die Eingangsübersetzung für die geraden Vorwärtsgänge.

In einer Ausgestaltung der Erfindung verläuft ein Vorwärtsgang ausschließlich über die beiden Getriebekonstanten als Übersetzungsstufen. Dabei kann ein Zahnradpaar eingespart werden, da für die Verwirklichung der zweiten Übersetzungsstufe kein eigenes separates Zahnradpaar erforderlich ist. Damit werden Vorteile hinsichtlich des Gewichts, der Kosten und der axialen Länge des Getriebes erzielt. Dieser Vorwärtsgang kann insbesondere der siebente Vorwärtsgang sein.

Wird der erste Vorwärtsgang als gewundener Gang ausgeführt, so kann eine Obersetzungsstufe sowohl im ersten als auch im zweiten Vorwärtsgang genutzt werden. Dadurch kann gegenüber einem "konventionellen" Getriebe mit nur zwei im Leistungsfluss befindlichen Übersetzungsstufen in allen Vorwärtsgängen ein weiteres Zahnradpaar eingespart werden. Damit werden Vorteile hinsichtlich des Gewichts, der Kosten und der axialen Länge des Getriebes erzielt.

In weiteren Ausgestaltungen kann eine weitere Übersetzungsstufe in je zwei Gängen - insbesondere dem vierten und fünften Vorwärtsgang - genutzt werden, so dass ein weiteres Zahnradpaar eingespart werden kann. Ferner kann eine Schaltkupplung - beispielsweise eine Synchronisierung oder eine Klauenkupplung - entfallen. Damit werden Vorteile hinsichtlich des Gewichts, der Kosten und der axialen Länge des Getriebes erzielt.

Der erste Rückwärtsgang kann in einer Ausgestaltung der Erfindung analog zum ersten Vorwärtsgang mit zwei zusätzlichen Zahnradstufen - d.h. insgesamt 5 Zahnradstufen - verwirklicht sein, so dass auch hier eine kurze Übersetzung bei einer vergleichsweise langen Eingangsübersetzung möglich ist.

Bei einigen Ausführungsbeispielen ist sogar die Verwirklichung eines dritten Rückwärtsganges ist möglich. Aufgrund der grundsätzlichen Bauweise des Getriebes ist dabei kein mechanischer Zusatzaufwand in Form von zusätzlichen Zahnrädern oder Schaltkupplungen erforderlich.

Der Stufensprung zwischen den ersten beiden Rückwärtsgängen entspricht bei einigen Ausführungen vorteilhafterweise dem Stufensprung zwischen dem ersten und dem zweiten Vorwärtsgang. Der zusätzliche Rückwärtsgang bzw. zumindest einer der zusätzlichen Rückwärtsgänge kann
- entweder als "Rückwärts-Schnellgang" oder
- als Standard-Rückwärtsgang für den Winterbetrieb verwendet werden. Im Winterbetrieb kann somit das Durchdrehen der Reifen auf glattem Untergrund infolge einer zu hohen Antriebsmomentabgabe an den Reifen verhindert werden.

In einer besonders vorteilhaften Ausgestaltung kann der Übergang zwischen den beiden/drei Rückwärtsgängen lastschaltbar ausgestaltet sein, so dass der Schaltvorgang komfortabel verzögerungsfrei ausgeführt werden kann.

In besonders vorteilhafter Weise kann die vordere - d.h. die der Doppelkupplung benachbarte - Eingangsübersetzung länger ausgelegt sein, als eine zweite Eingangsübersetzung. In anderen Worten besitzt eine vordere erste Getriebekonstante das größere Antriebszahnrad, als eine hintere zweite Getriebekonstante. Dadurch kann das in DE 103 32 210.8-12 beschriebene Lagerungskonzept eingesetzt und somit eine kompakte Lagerung der Wellen im vorderen Bereich des Getriebes erreicht werden. Damit geht der Vorteil einher, dass keine zusätzliche Zwischenwand für die Lagerung erforderlich ist.

Patentanspruch 8 zeigt eine Ausgestaltung der Erfindung, welche in vorteilhafter Weise zugkraftunterbrechungsfreie Schaltungen auch zwischen Rückwärtsgängen ermöglicht. Besonders vorteilhaft ist eine Ausgestaltung, mittels welcher zwischen sämtlichen Rückwärtsgängen ohne Zugkraftunterbrechung geschaltet werden kann.

Gemäß Verfahrensanspruch 23 wird eine Schaltkupplung beim Wechsel vom Leistungsfluss in das lastfreie Teilgetriebe eingerückt belassen, obwohl dies für den aktuell eingelegten Gang nicht unbedingt notwendig ist. Wenn diese außerhalb des Leistungsflusses eingerückt belassene Schaltkupplung in einer folgenden Vor- oder "Rückschaltung dann wieder benötigt wird, muss diese Schaltkupplung nicht mehr betätigt werden. Damit kann besonders schnell und unter vermindertem Verschleiß geschaltet werden. Dieses Verfahren kann sowohl bei Rückwärtsgängen als auch bei Vorwärtsgängen, als auch beim Wechsel zwischen Vorwärts- und Rückwärtsgängen Anwendung finden.

Weitere Vorteile der Erfindung gehen aus den weiteren Patentansprüchen, der Beschreibung und der Zeichnung vor.

Dabei zeigen:
- Fig. 1: ein Doppelkupplungsgetriebe in einer ersten Ausfüh- rungsform,
- Fig. 2: ein Schaltschema des Doppelkupplungsgetriebes gemäß Fig. 1,
- Fig. 3: das Doppelkupplungsgetriebe gemäß Fig. 1, wobei der Leistungsfluss im ersten Vorwärtsgang schraffiert dargestellt ist,
- Fig. 4: das Doppelkupplungsgetriebe gemäß Fig. 1, wobei der Leistungsfluss im zweiten Vorwärtsgang schraffiert dargestellt ist,
- Fig. 5: das Doppelkupplungsgetriebe gemäß Fig. 1, wobei der Leistungsfluss im dritten Vorwärtsgang schraffiert dargestellt ist,
- Fig. 6: das Doppelkupplungsgetriebe gemäß Fig. 1, wobei der Leistungsfluss im vierten Vorwärtsgang schraffiert dargestellt ist,
- Fig. 7: das Doppelkupplungsgetriebe gemäß Fig. 1, wobei der Leistungsfluss im fünften Vorwärtsgang schraffiert dargestellt ist,
- Fig. 8: das Doppelkupplungsgetriebe gemäß Fig. 1, wobei der Leistungsfluss im sechsten Vorwärtsgang schraffiert dargestellt ist,
- Fig. 9: das Doppelkupplungsgetriebe gemäß Fig. 1, wobei der Leistungsfluss im siebten Vorwärtsgang schraffiert dargestellt ist,
- Fig. 10: das Doppelkupplungsgetriebe gemäß Fig. 1, wobei der Leistungsfluss im ersten Rückwärtsgang schraffiert dargestellt ist,
- Fig. 11: das Doppelkupplungsgetriebe gemäß Fig. 1, wobei der Leistungsfluss im zweiten Rückwärtsgang schraffiert dargestellt ist,
- Fig. 12: das Doppelkupplungsgetriebe gemäß Fig. 1, wobei der Leistungsfluss im dritten Rückwärtsgang schraffiert dargestellt ist,
- Fig. 13: ein Doppelkupplungsgetriebe in einer zweiten Ausfüh- rungsform,
- Fig. 14: ein Schaltschema des Doppelkupplungsgetriebes gemäß Fig. 13,
- Fig. 15: ein Doppelkupplungsgetriebe in einer dritten Ausfüh- rungsform,
- Fig. 16: ein Schaltschema des Doppelkupplungsgetriebes gemäß Fig. 15,
- Fig. 17: ein Doppelkupplungsgetriebe in einer vierten Ausfüh- rungsform und
- Fig. 18: ein Schaltschema des Doppelkupplungsgetriebes gemäß Fig. 17.

Im folgenden werden die Ausdrücke:
- "vorne" und "hintein" und
- "erste bis siebente Zahnradebene"
verwendet.

"Vorne" ist dabei die bei Vorwärtsfahrt des Kraftfahrzeugs nach vorne weisende Richtung, wohingegen "hinten" entsprechend die entgegengesetzte Richtung ist. In der Zeichnung ist "vorne" links und "hinten" rechts dargestellt.

Die "erste bis siebente Zahnradebene" zählt dabei von vorne nach hinten.

Eine Zahnradebene ZE ist eine Ebene, in der zumindest zwei miteinander kämmende Zahnräder angeordnet sind. Eine Zahnradebene aus zumindest zwei miteinander kämmenden Zahnrädern bildet eine Übersetzungsstufe. Dies gilt auch in dem Fall, dass eine Übersetzung von i=1:1 vorliegt. Bei der praktischen Umsetzung der dargestellten Getriebeschemata kann es insbesondere in dem Fall, dass drei Zahnräder in einer Zahnradebene miteinander kämmen, sein, dass die Zahnräder aus Bauraum- oder Dimensionierungsgründen nicht exakt in einer Ebene angeordnet sein. Ein solcher Grund wären beispielsweise unterschiedliche Zahnbreiten auf den beiden Vorgelegewellen, die in unterschiedlichen zu übertragenden Drehmomenten begründet sind. Beispielsweise kann auch ein Zahnrad so breit ausgeführt sein, dass es in zwei Zahnradebenen mit unterschiedlichen Gegenzahnrädern kämmt.

Der im Zusammenhang mit der Erfindung verwendete Ausdruck Schaltkupplungsebene SKE bedeutet hier, dass sich in einer Ebene zumindest eine Schaltkupplung SK befindet. Bei der praktischen Umsetzung der dargestellten Getriebeschemata kann es insbesondere in dem Fall, dass sich zumindest zwei Schaltkupplungen in einer Schaltkupplungsebene befinden, sein, dass die Schaltkupplungen aus Bauraumgründen nicht exakt in einer Ebene angeordnet sein. Der Bauraum kann beispielsweise durch die Einbaulage einer Schaltaktuatorik zur Verschiebung der Schaltkupplungen zwecks eines Gangwechsels vorgegeben sein.

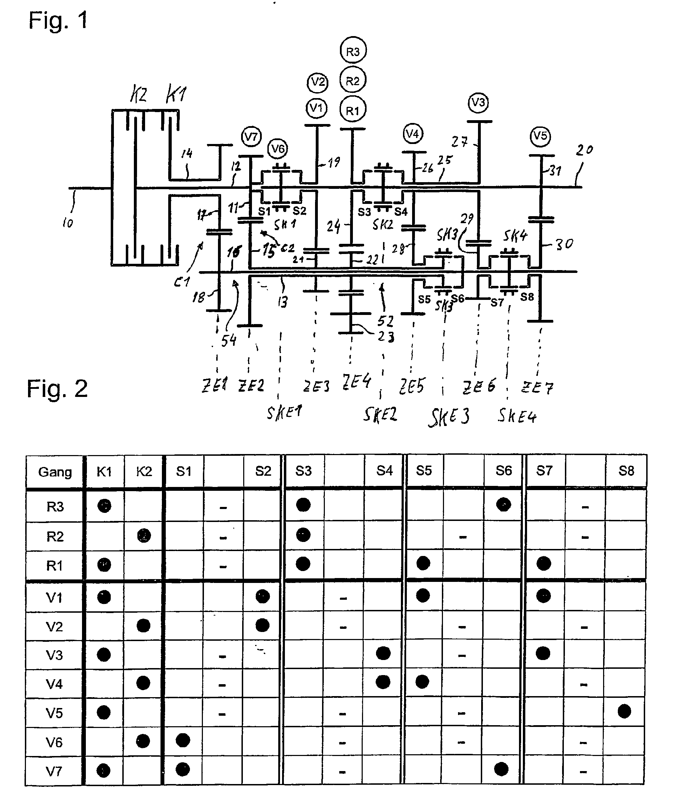

Fig. 1 zeigt ein Doppelkupplungsgetriebe in einer ersten Ausführungsform, welche Anwendung in einem Heckantrieb oder Mehrachsantrieb eines Kraftfahrzeuges findet, dessen Antriebsmotor und Doppelkupplungsgetriebe in Fahrtrichtung längs eingebaut sind. Dabei kann es sich insbesondere um einen drehmomentstarken Personenkraftwagen oder ein Nutzfahrzeug handeln.

Bei dem Doppelkupplungsgetriebe ist eine Eingangswelle 10 mit einer Getriebeausgangswelle 20 durch ein erstes Teilgetriebe 54 und ein zweites Teilgetriebe 52 verbunden. Die beiden Teilgetriebe 52 und 54 sind im Leistungsfluss parallel zueinander angeordnet. Die Teilgetriebe 52, 54 besitzen je eine reibschlüssige Lastschaltkupplung K1, K2 und je eine Zwischenwelle 12, 14, von denen die erste Zwischenwelle 14 als radial äußere Hohlwelle und die zweite Zwischenwelle 12 als radial innere Zwischenwelle 12 ausgebildet ist. Die Zwischenwellen 12, 14 sind
- zueinander konzentrisch
- zur Eingangswelle 10 koaxial und
- zur Getriebeausgangswelle 20 koaxial bzw. fluchtend angeordnet und können jeweils über die Lastschaltkupplung K1, K2 mit der Eingangswelle 10 wirkungsmäßig verbunden werden. Die Lagerung der Wellen erfolgt, wie in DE 103 32 210.8-12 beschrieben.

Die zweite Zwischenwelle 12 des zweiten Teilgetriebes 52 ist mittels einer ersten ein- und ausrückbaren Schaltkupplung SK1 zur Bildung eines direkten sechsten Vorwärtsgangs V6 mit der Getriebeausgangswelle 20 in einer Stellung S1 drehfest kuppelbar. Ferner weist diese Zwischenwelle 12 ein Antriebszahnrad 11 einer zweiten Getriebekonstanten C2 auf, das mit einem Abtriebszahnrad 15 der zweiten Getriebekonstanten C2 kämmt. Die zweite Getriebekonstante C2 bildet damit eine zweite Zahnradebene ZE2. Das Abtriebszahnrad 15 dieser Getriebekonstanten C2 ist drehfest und koaxial auf einer Hohlwelle 13 des zweiten Teilgetriebes 52 angeordnet, welches von einer Innenwelle 16 des ersten Teilgetriebes 54 durchsetzt wird.

Diese Innenwelle 16 weist an deren vorderem Ende ein koaxiales Abtriebszahnrad 18 einer ersten Getriebekonstanten C1 auf, welches mit einem Antriebszahnrad 17 der ersten Getriebekonstanten C1 kämmt. Dieses Antriebszahnrad 17 ist drehfest und koaxial zur ersten Zwischenwelle 14. Deren Getriebekonstante C1 bildet eine erste Zahnradebene ZE1.

Die erste Getriebekonstante C1 bildet die erste Eingangsübersetzung, welche vier ungeraden Vorwärtsgängen V1, V3, V5, V7 und zwei ungeraden Rückwärtsgängen R1, R3 zugeordnet ist. Hingegen bildet die zweite Getriebekonstante C2 eine zweite Eingangsübersetzung, welche drei geraden Vorwärtsgängen V2, V4, V6 und einem geraden Rückwärtsgang R2 zugeordnet ist.

Der zweiten Zahnradebene ZE2 folgt die erste Schaltkupplungsebene SKE1, in der die besagte Schaltkupplung SK1 axial zwischen dem Antriebsrad 11 der zweiten Getriebekonstanten C2 und einem Losrad 19 angeordnet ist. Dieses koaxial drehbar auf der Getriebeausgangswelle 20 angeordnete Losrad 19 ist in einer Stellung S2 der Schaltkupplung SK1 mit der Getriebeausgangswelle 20 drehfest gekoppelt. Das Losrad 19 kämmt in einer dritten Zahnradebene ZE3 mit einem kleineren Zahnrad 21, welches drehfest mit der Hohlwelle 13 des zweiten Teilgetriebes 52 verbunden ist.

Axial benachbart hinter diesem Zahnrad 21 ist ein Zahnrad 22 einer vierten Zahnradebene ZE4 angeordnet, welche drei Rückwärtsgängen R1, R2 und R3 zugeordnet ist. Dieses Zahnrad 22 kämmt mit einem achsparallel versetztem Zwischenrad 23, welches drehbar angeordnet ist. Dieses Zwischenrad 23 kämmt mit einem Losrad 24, welches koaxial und drehbar auf der Getriebeausgangswelle 20 angeordnet ist. Axial hinter diesem Losrad 24 ist eine zweite Schaltkupplung SK2 angeordnet, mit welcher dieses Losrad 24 in einer Stellung S3 mit der Getriebeausgangswelle 20 drehfest koppelbar ist.

Axial hinter dem in einer zweiten Schaltkupplungsebene SKE2 angeordneten Schaltkupplung SK2 ist eine zweite Hohlwelle 25 angeordnet, welche in einer Stellung S4 der zweiten Schaltkupplung SK2 drehfest mit der Getriebeausgangswelle 20 verbunden ist. Die zweite Hohlwelle 25 ist in einer vorderen fünften Zahnradebene ZE5 drehfest mit einem Zahnrad 26 verbunden, welches kleiner ist, als ein am hinteren Ende der Hohlwelle 26 drehfest mit dieser verbundenes Zahnrad 27. Das vordere Zahnrad 26 kämmt mit einem koaxial und drehbar auf der ersten Hohlwelle 13 des zweiten Teilgetriebes 52 angeordneten Zahnrad 28. Axial hinter diesem Zahnrad 28 liegt die dritte Schaltkupplungsebene SKE3 mit der Schaltkupplung SK3, welche zur Herstellung einer drehfesten Verbindung zwischen der ersten Hohlwelle 13 und dieses Zahnrades 28 nach vorne in die Stellung S5 betätigbar ist.

Diese Schaltkupplung SK3 ist zur Herstellung einer drehfesten Verbindung mit einem drehbar und koaxial auf der Innenwelle 16 gelagerten Zahnrad 29 nach hinten betätigbar. Dieses Zahnrad 29 kämmt in einer sechsten Zahnradebene ZE6 mit dem besagten Zahnrad 27 am hinteren Ende der zweiten Hohlwelle 25.

Hinter der sechsten Zahnradebene ZE6 liegt die siebte Zahnradebene ZE7, in der ein drehbar und koaxial auf der Innenwelle 16 angeordnetes Losrad 30 und ein drehfest und koxial am Ende der Getriebeausgangswelle 10 angeordnetes Festrad 31 liegen.

Axial zwischen den beiden letzten Zahnradebenen ZE6 und ZE7 liegt koaxial zur Innenwelle 16 die vierte Schaltkupplung SK4 in der vierten Schaltkupplungsebene SKE4. Mit dieser Schaltkupplung SK4 ist
- in einer vorderen Stellung S7 das Zahnrad 29 und alternativ
- in einer hinteren Stellung S8 das Losrad 30 mit der Innenwelle 16 drehfest koppelbar.

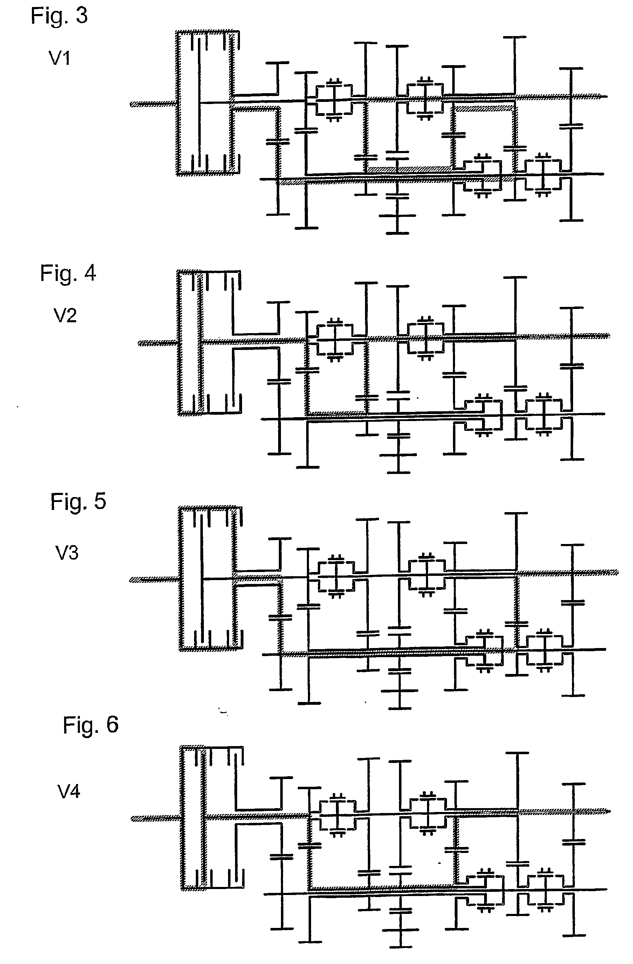

Fig. 2 zeigt ein Schaltschema des Doppelkupplungsgetriebes gemäß Fig. 1. Dieses wird im folgenden anhand der Fig. 2 mit Bezugnahme auf Fig. 3 bis Fig. 12 für die einzelnen Gänge V1 bis V7 und R1 bis R3 beschrieben:

Im ersten Vorwärtsgang V1 ist
- die erste Lastschaltkupplung K1 eingerückt,
- die erste Schaltkupplung SK1 in der hinteren Stellung S2,
- die zweite Schaltkupplung SK2 in der Neutralstellung,
- die dritte Schaltkupplung SK3 in der vorderen Stellung S5 und
- die vierte Schaltkupplung SK4 in der vorderen Stellung S7.

Wie in Fig. 3 ersichtlich ist, ist der erste Vorwärtsgang V1 ein gewundener Gang. Der Leistungsfluss verläuft dabei axial
- zuerst fünf Zahnradebenen nach hinten,
- dann drei Zahnradebenen nach vorne und
- im Anschluss bis zum Getriebeabtrieb.

Im einzelnen verläuft der Leistungsfluss aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über die sechste Zahnradebene ZE6,
- über die zweite Hohlwelle 25,
- über die fünfte Zahnradebene ZE5,
- über einen Teilbereich der ersten Hohlwelle 13 und
- über die dritte Zahnradebene ZE3
auf die Getriebeausgangswelle 20.

Im zweiten Vorwärtsgang V2 ist
- die zweite Lastschaltkupplung K2 eingerückt,
- die erste Schaltkupplung SK1 in der hinteren Stellung S2,
- die zweite Schaltkupplung SK2 in der Neutralstellung,
- die dritte Schaltkupplung SK3 ebenfalls in der Neutralstellung und
- die vierte Schaltkupplung SK4 ebenfalls in der Neutralstellung.

Demzufolge ist ausschließlich eine Schaltkupplung SK1 eingerückt.

Der zweite Vorwärtsgang V2 ist dabei nicht als gewundener Gang ausgeführt. Wie in Fig. 4 ersichtlich ist, verläuft der Leistungsfluss des zweiten Vorwärtsganges V2 demzufolge aufeinanderfolgend
- von der Getriebeeingangswelle 10,
- über die zweite Lastschaltkupplung K2,
- über die zweite Zwischenwelle 12,
- über die zweite Getriebekonstante C2,
- über einen vorderen Teilbereich der Hohlwelle 13 und
- als letzte Übersetzungsstufe ebenso wie beim ersten Vorwärtsgang V1 über die dritte Zahnradebene ZE3
   auf die Getriebeausgangswelle 20.
Im dritten Vorwärtsgang V3 ist
- die erste Lastschaltkupplung K1 eingerückt,
- die erste Schaltkupplung SK1 in der Neutralstellung,
- die zweite Schaltkupplung SK2 in der hinteren Stellung S4,
- die dritte Schaltkupplung SK3 in der Neutralstellung und
- die vierte Schaltkupplung SK4 in der vorderen Stellung S7.

Der dritte Vorwärtsgang V3 ist dabei nicht als gewundener Gang ausgeführt. Wie in Fig. 5 ersichtlich ist, verläuft der Leistungsfluss des dritten Vorwärtsganges V3 demzufolge aufeinanderfolgend
- von der Getriebeeingangswelle 10,
- über die erste Lastschaltkupplung K1,
- über die erste Zwischenwelle 14,
- über die erste Getriebekonstante C1,
- über einen vorderen Teilbereich der Innenwelle 16 und
- als letzte Übersetzungsstufe über die sechste Zahnradebene ZE6
auf die Getriebeausgangswelle 20.

Im vierten Vorwärtsgang V4 ist
- die zweite Lastschaltkupplung K2 eingerückt,
- die erste Schaltkupplung SK1 in der Neutralstellung,
- die zweite Schaltkupplung SK2 in der hinteren Stellung S4,
- die dritte Schaltkupplung SK3 in der vorderen Stellung S5 und
- die vierte Schaltkupplung SK4 in der Neutralstellung.

Der vierte Vorwärtsgang V4 ist dabei nicht als gewundener Gang ausgeführt. Wie in Fig. 6 ersichtlich ist, verläuft der Leistungsfluss des vierten Vorwärtsganges V4 demzufolge aufeinanderfolgend
- von der Getriebeeingangswelle 10,
- über die zweite Lastschaltkupplung K2,
- über die zweite Zwischenwelle 12,
- über die zweite Getriebekonstante C2,
- über einen Großteil der Hohlwelle 13 und
- als letzte Übersetzungsstufe über die fünfte Zahnradebene ZE5
auf die Getriebeausgangswelle 20.

Im fünften Vorwärtsgang V5 ist
- die erste Lastschaltkupplung K1 eingerückt,
- die erste Schaltkupplung SK1 in der Neutralstellung,
- die zweite Schaltkupplung SK2 in der Neutralstellung,
- die dritte Schaltkupplung SK3 in der Neutralstellung und
- die vierte Schaltkupplung SK4 in der hinteren Stellung S8.

Demzufolge ist ausschließlich eine Schaltkupplung SK4 eingerückt.

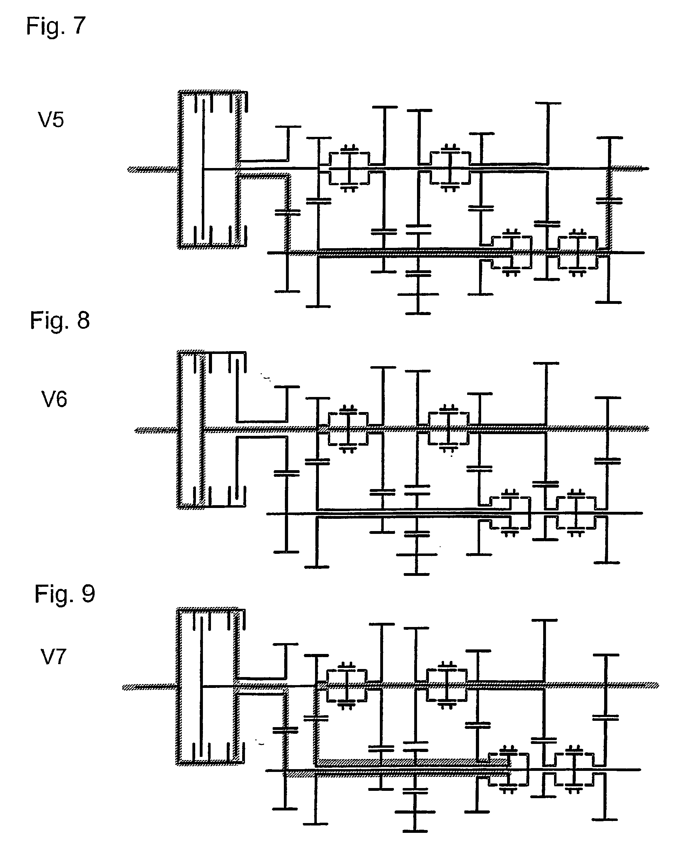

Der fünfte Vorwärtsgang V5 ist dabei nicht als gewundener Gang ausgeführt. Wie in Fig. 7 ersichtlich ist, verläuft der Leistungsfluss des fünften Vorwärtsganges V5 demzufolge aufeinanderfolgend
- von der Getriebeeingangswelle 10,
- über die erste Lastschaltkupplung K1,
- über die erste Zwischenwelle 14,
- über die erste Getriebekonstante C1,
- über einen Großteil der Innenwelle 16 und
- als letzte Übersetzungsstufe über die siebte und damit hinterste Zahnradebene ZE7
auf die Getriebeausgangswelle 20.

Im sechsten Vorwärtsgang V6 ist die zweite Lastschaltkupplung K2 eingerückt. Ebenso, wie im Fall des fünften Vorwärtsganges V5, ist auch im sechsten Vorwärtsgang V6 ausschließlich eine Schaltkupplung eingerückt. Dies ist im Falle des sechsten Vorwärtsgang V6 die erste Schaltkupplung SK1, die sich in der vorderen Stellung S1 befindet. Die übrigen drei Schaltkupplungen SK2, SK3, SK4 befinden sich in der Neutralstellung. In Fig. 8 ist ersichtlich, dass der sechste Vorwärtsgang V6 als direkter Vorwärtsgang ausgeführt ist. Bei diesem direktem Vorwärtsgang ist die zweite Zwischenwelle 12 drehfest mit der Getriebeausgangswelle 20 verbunden, so dass der sechste Vorwärtsgang V6 ein Übersetzungsverhältnis von 1:1 aufweist.

Im siebten Vorwärtsgang V7 ist
- die erste Lastschaltkupplung K1 eingerückt,
- die erste Schaltkupplung SK1 in der vorderen Stellung S1,
- die zweite Schaltkupplung SK2 in der Neutralstellung,
- die dritte Schaltkupplung SK3 in der hinteren Stellung S6 und
- die vierte Schaltkupplung SK4 in der Neutralstellung.

Wie in Fig. 9 ersichtlich ist, ist der siebte Vorwärtsgang V7 kein gewundener Gang. Jedoch verläuft der Leistungsfluss ebenso wie im Falle des ersten Vorwärtsganges V1 in einem Teilbereich axial hin und zurück. Der Leistungsfluss verläuft dabei axial
- zuerst vier Zahnradebenen nach hinten,
- dann drei Zahnradebenen nach vorne und
- im Anschluss bis zum Getriebeabtrieb.

Im einzelnen verläuft der Leistungsflusses aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über die Schaltkupplung SK3, welche die Innenwelle 16 drehfest mit der ersten Hohlwelle 13 an deren hinterem Ende koppelt und
- als letzte Übersetzungsstufe über die zweite Zahnradebene ZE2, in welcher die Getriebekonstante C2 liegt,
auf die Getriebeausgangswelle 20.

Im ersten Rückwärtsgang R1 ist
- die erste Lastschaltkupplung K1 eingerückt,
- die erste Schaltkupplung SK1 in der Neutralstellung,
- die zweite Schaltkupplung SK2 in der vorderen Stellung S3,
- die dritte Schaltkupplung SK3 in der vorderen Stellung S5 und
- die vierte Schaltkupplung SK4 in der vorderen Stellung S7.

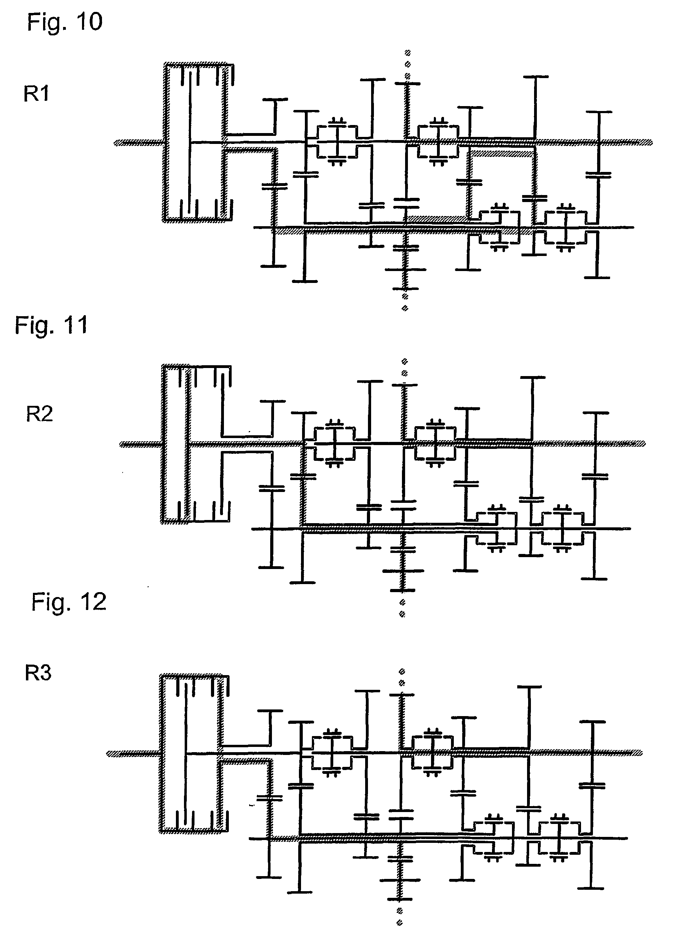

Wie in Fig. 10 ersichtlich ist, ist der erste Rückwärtsgang R1 ein gewundener Gang. Der Leistungsfluss verläuft dabei axial
- zuerst fünf Zahnradebenen nach hinten,
- dann zwei Zahnradebenen nach vorne und
- im Anschluss bis zum Getriebeabtrieb.

Im einzelnen verläuft der Leistungsfluss aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über die sechste Zahnradebene ZE6,
- über die zweite Hohlwelle 25,
- über die fünfte Zahnradebene ZE5,
- über einen Teilbereich der ersten Hohlwelle 13 und
- über die drei Zahnräder 22, 23, 24 der vierten Zahnradebene ZE4
auf die Getriebeausgangswelle 20.

Damit verläuft der in Fig. 10 ersichtliche Leistungsfluss des ersten Rückwärtsganges R1 sehr ähnlich dem in Fig. 3 ersichtlichen Leistungsfluss des ersten Vorwärtsganges V1, so dass sich nahezu gleiche Übersetzungsverhältnisse ergeben.

Im zweiten Rückwärtsgang R2 ist
- die zweite Lastschaltkupplung K2 eingerückt,
- die erste Schaltkupplung SK1 in der Neutralstellung,
- die zweite Schaltkupplung SK2 in der vorderen Stellung S3,
- die dritte Schaltkupplung SK3 in der Neutralstellung und
- die vierte Schaltkupplung SK4 in der Neutralstellung. Demzufolge ist ausschließlich eine Schaltkupplung SK2 eingerückt.

Der zweite Rückwärtsgang R2 ist dabei nicht als gewundener Gang ausgeführt. Wie in Fig. 11 ersichtlich ist, verläuft der Leistungsfluss des zweiten Rückwärtsganges R2 demzufolge aufeinanderfolgend
- von der Getriebeeingangswelle 10,
- über die zweite Lastschaltkupplung K2,
- über die zweite Zwischenwelle 12,
- über die zweite Getriebekonstante C2,
- über einen vorderen Teilbereich der Hohlwelle 13 und
- als letzte Übersetzungsstufe ebenso wie beim ersten Rückwärtsgang R1 über die drei Zahnräder 22, 23, 24 der vierten Zahnradebene ZE4
auf die Getriebeausgangswelle 20.

Damit verläuft der in Fig. 11 ersichtliche Leistungsfluss des zweiten Rückwärtsganges R2 sehr ähnlich dem in Fig. 4 ersichtlichen Leistungsfluss des zweiten Vorwärtsganges V2, so dass sich nahezu gleiche Übersetzungen ergeben.

Im dritten Rückwärtsgang R3 ist
- die erste Lastschaltkupplung K1 eingerückt,
- die erste Schaltkupplung SK1 in der Neutralstellung,
- die zweite Schaltkupplung SK2 in der vorderen Stellung S3,
- die dritte Schaltkupplung SK3 in der hinteren Stellung S6 und
- die vierte Schaltkupplung SK4 in der Neutralstellung.

Wie in Fig. 12 ersichtlich ist, ist der dritte Rückwärtsgang R3 kein gewundener Gang. Im einzelnen verläuft der Leistungsflusses aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über die Schaltkupplung SK3, welche die Innenwelle 16 drehfest mit der ersten Hohlwelle 13 an deren hinterem Ende koppelt und
- als zweite Übersetzungsstufe über die drei Zahnräder 22, 23, 24 der vierten Zahnradebene ZE4
   auf die Getriebeausgangswelle 20.

Damit ist für einen Wechsel innerhalb der Rückwärtsgänge neben der Überschneidungssteuerung der Doppelkupplung ausschließlich eine Schaltkupplung zu betätigen. Dies ist nämlich für einen Wechsel vom zweiten Rückwärtsgang R2 in den dritten Rückwärtsgang R3 die Schaltkupplung SK3. Für eine R3→R2-Schaltung ist ebenso nur die Schaltkupplung SK3 zu betätigen.

In einer besonders vorteilhaften weiteren Ausführung der ersten Ausführungsform wird eine Schaltkupplung beim Wechsel vom Leistungsfluss in das lastfreie Teilgetriebe eingerückt belassen, obwohl dies für den aktuell eingelegten Gang nicht unbedingt notwendig ist. Und zwar bleibt beim Wechsel vom ersten Vorwärtsgang V1 in den zweiten Vorwärtsgang V2 die dann im lastfreien Teilgetriebe 54 befindliche Schaltkupplung SK4 in der Stellung S7 eingerückt. Damit muss zum einen nur eine einzige Schaltkupplung - nämlich SK3 - für den Wechsel vom ersten Vorwärtsgang V1 in den zweiten Vorwärtsgang V2 betätigt werden. D.h. die Schaltkupplung SK3 wird in die Neutralstellung betätigt. Zum anderen muss für die wahrscheinlich zukünftig folgende Schaltung in den dritten Vorwärtsgang V3 die Schaltkupplung SK4 nicht mehr betätigt werden, da diese infolge des Wechsels auf die Lastschaltkupplung K1 nunmehr wieder in der korrekten Stellung S7 im Leistungsfluss befindlich ist. Damit wird eine Vorteil hinsichtlich der Schaltzeit und der Abnutzung der Schaltkupplungen erzielt. Diese Ausführung kann dabei bei sämtlichen Vorwärtsgängen und/oder Rückwärtsgängen Anwendung finden, bei denen sich zukünftig einzulegende Schaltkupplungen SK im lastfreien Teilgetriebe befinden. Es ist sogar möglich, einen Gangwechsel ohne Betätigung einer einzigen Schaltkupplung SK durchzuführen. Lediglich eine Überschneidungssteuerung der Doppelkupplung reicht, um den Gangwechsel herbeizuführen. Dieses Schaltverfahren kann sowohl bei Hochschaltungen als auch bei Rückschaltungen Anwendung finden.

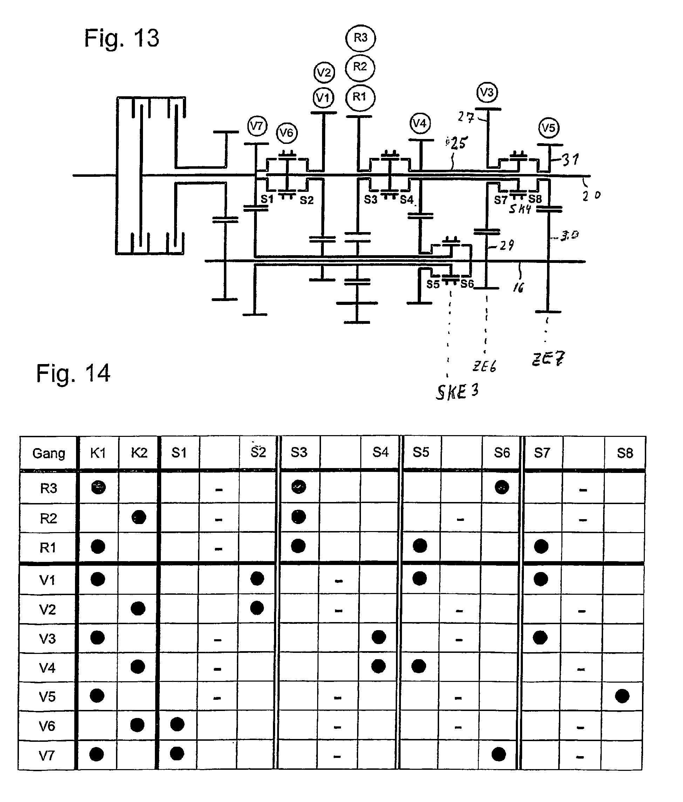

Fig. 13 zeigt ein Doppelkupplungsgetriebe in einer zweiten Ausführungsform.

Der Aufbau dieses Doppelkupplungsgetriebes ist von vorne bis zur dritten Schaltkupplungsebene SKE3 identisch der ersten Ausführungsform, weshalb hier auf letztere verwiesen wird.

Eine vierte Schaltkupplung SK4 ist jedoch koaxial zur Getriebeeingangswelle 20 angeordnet. Mit dieser Schalkupplung SK4 kann einerseits in einer Stellung S7 ein drehbar und koaxial auf der zweiten Hohlwelle 25 in einer sechsten Zahnradebene ZE6 angeordnetes Zahnrad 27 drehfest mit der Hohlwelle 25 verbunden werden. Andererseits kann in einer Stellung S8 ein axial benachbartes drehbar und koaxial auf der Getriebeausgangswelle 20 in einer siebten Zahnradebene ZE7 angeordnetes Zahnrad 31 drehfest mit der Getriebeausgangswelle 20 verbunden werden.

Ein koaxial und drehfest auf der Innenwelle 16 angeordnetes Festrad 29 kämmt mit dem Zahnrad 27 in der sechsten Zahnradebene ZE6. Ein axial benachbart zu dem Zahnrad 29 angeordnetes Festrad 30, welches koaxial und drehfest auf der Innenwelle 16 angeordnet ist, kämmt mit dem Zahnrad 31 in der siebten Zahnradebene ZE7.

Gegenüber der ersten Ausführungsform ist demzufolge - vereinfacht gesagt - die vierte Schaltkupplung SK4 auf der Getriebeausgangswelle 20 anstelle auf der Innenwelle 16. Die in der ersten Ausführungsform als Losräder ausgeführten Zahnräder 29 und 30 sind in der zweiten Ausführungsform als Festräder ausgeführt. Hingegen sind die in der ersten Ausführungsform permanent drehfest zu deren Welle 25 bzw. 20 ausgeführten Zahnräder 27 und 31 in der zweiten Ausführungsform als Losräder ausgeführt.

Fig. 14 zeigt ein Schhaltschema des Doppelkupplungsgetriebes gemäß Fig. 13. Dieses Schaltschema ist identisch dem in Fig. 2 gezeigten Schaltschema des Doppelkupplungsgetriebes gemäß erster Ausführungsform.

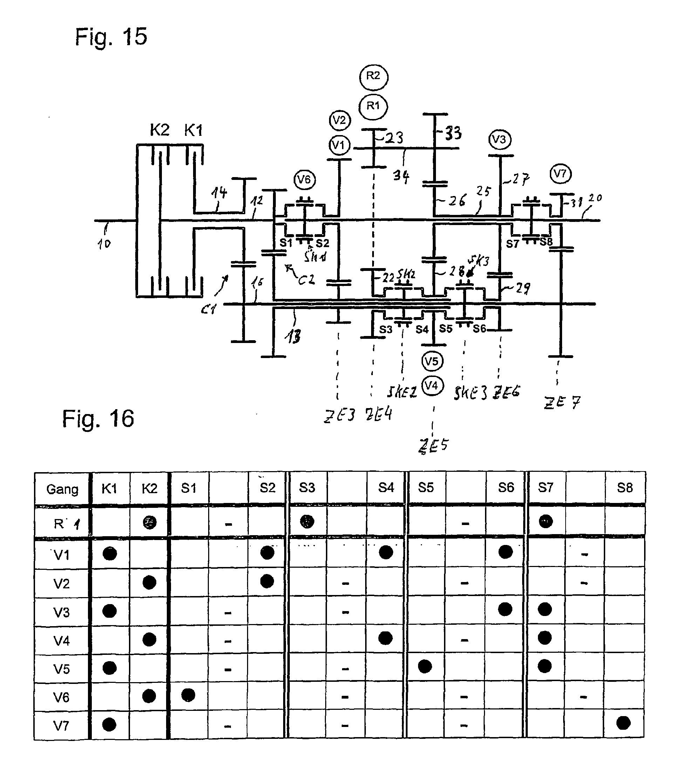

Fig. 15 zeigt ein Doppelkupplungsgetriebe in einer dritten Ausführungsform.

Der Aufbau dieses Doopelkupplungsgetriebes ist von vorne bis zur dritten Schaltkupplungsebene SKE3 identisch der ersten und der zweiten Ausführungsform, weshalb hier diesbezüglich auf diese beiden verwiesen wird. Bezüglich der siebten Zahnradebene ZE7 wird auf die zweite Ausführungsform verwiesen, da diese in dem Bereich der siebten Zahnradebene ZE7 identisch ist.

In der dem einzigen Rückwärtsgang R1 zugeordneten Zahnradebene ZE4 sind im Gegensatz zu den vorhergehenden Ausführungsformen lediglich zwei miteinander kämmende Zahnräder angeordnet. Eines dieser beiden Zahnräder ist ein Losrad 22, welches drehbar und koaxial auf der ersten Hohlwelle 13 angeordnet ist. Das andere Zahnrad ist ein Zwischenrad 23, welches im Gegensatz zu den vorhergehenden Ausführungsbeispielen nicht direkt auf ein Zahnrad in der vierten Zahnradebene ZE4 abtreibt, sondern mittels eines zweiten Zwischenrades 33 über ein gleichsinniges Übersetzungsverhältnis auf ein Zahnrad 26 abtreibt, welches in der axial dahinter liegenden Zahnradebene ZE5 liegt. Dazu liegt das zweite Zwischenrad 33 ebenfalls in der fünften Zahnradebene ZE5 und ist über eine Zwischenwelle 34 drehfest mit dem ersten Zwischenrad 23 gekoppelt. Während einerseits das Zwischenrad 33 mit dem Zahnrad 26 kämmt, welches drehbar und koaxial auf der Getriebeausgangswelle 20 angeordnet ist, kämmt andererseits ein Losrad 28 mit dem Zahnrad 26. Dieses Losrad 28 drehbar und koaxial auf der ersten Hohlwelle 13 und ist in der fünften Zahnradebene ZE5 angeordnet. Zwischen diesem Losrad 28 und dem Losrad 22 ist ein Schaltkupplung SK2 in der zweiten Schaltkupplungsebene SKE2 angeordnet. Diese Schaltkupplung SK2 ist zur drehfesten Verbindung der ersten Hohlwelle 13 mit dem Losrad 22 in eine Stellung S3 nach vorne verschieblich. Wird die Schaltkupplung SK2 hingegen nach hinten verschoben, so stellt diese in einer Stellung S4 eine drehfeste Verbindung zwischen der ersten Hohlwelle 13 und dem Losrad 28 her.

Hinter diesem Losrad 28 liegt eine dritte Schaltkupplung SK3 in einer dritten Schaltkupplungsebene SKE3. Deren Gleichlaufkörper ist drehfest auf der Innenwelle 16 angeordnet, so das mit dieser Schaltkupplung SK3 bei Verschiebung nach vorne in einer Stellung S5 eine drehfeste Verbindung zwischen der besagten Innenwelle 16 und dem Losrad 28 herstellbar ist. Wird die Schaltkupplung SK3 hingegen nach hinten in eine Stellung S6 verschoben, so ist mit dieser eine drehfeste Verbindung zwischen der Innenwelle 16 und einem koaxial und drehbar auf der Innenwelle 16 angeordneten Losrad 29 hergestellt, welches in einer sechsten Zahnradebene ZE6 liegt. Dieses Losrad 29 kämmt mit einem in der selben Zahnradebene ZE6 drehbar und koaxial auf der Getriebeausgangswelle 20 angeordnetem Losrad 27. Dieses Losrad 27 ist mittels einer zweiten Hohlwelle 25 drehfest mit dem davor liegendem Losrad 26 permanent drehfest verbunden. Hinter den beiden miteinander gekoppelten Losrädern 27, 26 liegt eine vierte Schaltkupplung SK4 koaxial und drehfest zur Getriebeausgangswelle 20. Diese Schaltkupplung SK4 ist zur Herstellung einer drehfesten Verbindung zwischen der Getriebeausgangswelle 20 und dem Losrad 27 nach vorne verschieblich. Zur Herstellung einer drehfesten Verbindung zwischen der Getriebeausgangswelle 20 und dem Losrad 31 in der siebten Zahnradebene ZE7 ist die Schaltkupplung SK4 nach hinten verschieblich.

Fig. 16 zeigt ein Schaltschema des Doppelkupplungsgetriebes gemäß Fig. 15. Dieses wird im folgenden für die einzelnen Vorwärtsgänge V1 bis V7 und den Rückwärtsgang R1 beschrieben:

Im ersten Vorwärtsgang V1 ist
- die erste Lastschaltkupplung K1 eingerückt,
- die erste Schaltkupplung SK1 in der hinteren Stellung S2,
- die zweite Schaltkupplung SK2 in der hinteren Stellung S4,
- die dritte Schaltkupplung SK3 in der hinteren Stellung S6 und
- die vierte Schaltkupplung SK4 in der Neutralstellung.

Dabei ist der erste Vorwärtsgang V1 ein gewundener Gang. Der Leistungsfluss verläuft dabei axial
- zuerst fünf Zahnrädebenen nach hinten,
- dann drei Zahnradebenen nach vorne und
- im Anschluss bis zum Getriebeabtrieb.

Im einzelnen verläuft der Leistungsfluss aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über die sechste Zahnradebene ZE6,
- über die zweite Hohlwelle 25,
- über die fünfte Zahnradebene ZE5,
- über einen Teilbereich der ersten Hohlwelle 13 und
- über die dritte Zahnradebene ZE3
auf die Getriebeausgangswelle 20.

Im zweiten Vorwärtsgang V2 ist
- die zweite Lastschaltkupplung K2 eingerückt,
- die erste Schaltkupplung SK1 in der hinteren Stellung S2,
- die zweite Schaltkupplung SK2 in der Neutralstellung,
- die dritte Schaltkupplung SK3 ebenfalls in der Neutralstellung und
- die vierte Schaltkupplung SK4 ebenfalls in der Neutralstellung.
Demzufolge ist einzig die Schaltkupplung SK1 eingerückt.

Der zweite Vorwärtsgang V2 ist dabei nicht als gewundener Gang ausgeführt. Der Leistungsfluss des zweiten Vorwärtsganges V2 verläuft demzufolge aufeinanderfolgend
- von der Getriebeeingangswelle 10,
- über die zweite Lastschaltkupplung K2,
- über die zweite Zwischenwelle 12,
- über die zweite Getriebekonstante C2,
- über einen vorderen Teilbereich der Hohlwelle 13 und
- als letzte Übersetzungsstufe ebenso wie beim ersten Vorwärtsgang V1 über die dritte Zahnradebene ZE3 auf die Getriebeausgangswelle 20.

Im dritten Vorwärtsgang V3 ist
- die erste Lastschaltkupplung K1 eingerückt,
- die erste Schaltkupplung SK1 in der Neutralstellung,
- die zweite Schaltkupplung SK2 in der Neutralstellung,
- die dritte Schaltkupplung SK3 in der hinteren Stellung S6 und
- die vierte Schaltkupplung SK4 in der vorderen Stellung S7.

Der dritte Vorwärtsgang V3 ist dabei nicht als gewundener Gang ausgeführt. Der Leistungsfluss des dritten Vorwärtsganges V3 verläuft demzufolge aufeinanderfolgend
- von der Getriebeeingangswelle 10,
- über die erste Lastschaltkupplung K1,
- über die erste Zwischenwelle 14,
- über die erste Getriebekonstante C1,
- über einen vorderen Teilbereich der Innenwelle 16 und
- als letzte Übersetzungsstufe über die sechste Zahnradebene ZE6
auf die Getriebeausgangswelle 20.

Im vierten Vorwärtsgang V4 ist
- die zweite Lastschaltkupplung K2 eingerückt,
- die erste Schaltkupplung SK1 in der Neutralstellung,
- die zweite Schaltkupplung SK2 in der hinteren Stellung S4,
- die dritte Schaltkupplung SK3 in der Neutralstellung und
- die vierte Schaltkupplung SK4 in der vorderen Stellung S7.

Der vierte Vorwärtsgang V4 ist dabei nicht als gewundener Gang ausgeführt. Der Leistungsfluss des vierten Vorwärtsganges V4 verläuft demzufolge aufeinanderfolgend
- von der Getriebeeingangswelle 10,
- über die zweite Lastschaltkupplung K2,
- über die zweite Zwischenwelle 12,
- über die zweite Getriebekonstante C2,
- über einen Großteil der Hohlwelle 13 und
- als letzte Übersetzungsstufe über die fünfte Zahnradebene ZE5
auf die Getriebeausgangswelle 20.

Im fünften Vorwärtsgang V5 ist
- die erste Lastschaltkupplung K1 eingerückt,
- die erste Schaltkupplung SK1 in der Neutralstellung,
- die zweite Schaltkupplung SK2 in der Neutralstellung,
- die dritte Schaltkupplung SK3 in der vorderen Stellung S5 und
- die vierte Schaltkupplung SK4 in der vorderen Stellung S7.

Der fünfte Vorwärtsgang V5 ist dabei nicht als gewundener Gang ausgeführt. Der Leistungsfluss des fünften Vorwärtsganges V5 verläuft demzufolge aufeinanderfolgend
- von der Getriebeeingangswelle 10,
- über die erste Lastschaltkupplung K1,
- über die erste Zwischenwelle 14,
- über die erste Getriebekonstante C1,
- über einen Großteil der Innenwelle 16 und
- als letzte Übersetzungsstufe ebenso, wie im vierten Vorwärtsgang V4 über die fünfte Zahnradebene ZE5
auf die Getriebeausgangswelle 20.

Im sechsten Vorwärtsgang V6 ist die zweite Lastschaltkupplung K2 eingerückt. Ebenso, wie im Fall des weiter unten erläuterten siebten Vorwärtsganges V7, ist auch im sechsten Vorwärtsgang V6 ausschließlich eine Schaltkupplung eingerückt. Dies ist im Falle des sechsten Vorwärtsgang V6 die erste Schaltkupplung SK1, die sich in der vorderen Stellung S1 befindet. Die übrigen drei Schaltkupplungen SK2, SK3, SK4 befinden sich in der Neutralstellung. Damit ist der sechste Vorwärtsgang V6 als direkter Vorwärtsgang ausgeführt. Bei diesem direktem Vorwärtsgang ist die zweite Zwischenwelle 12 drehfest mit der Getriebeausgangswelle 20 verbunden, so dass der sechste Vorwärtsgang V6 ein Übersetzungsverhältnis von 1:1 aufweist.

Im siebten Vorwärtsgang V7 ist
- die erste Lastschaltkupplung K1 eingerückt,
- die erste Schaltkupplung SK1 in der Neutralstellung,
- die zweite Schaltkupplung SK2 in der Neutralstellung,
- die dritte Schaltkupplung SK3 in der Neutralstellung und
- die vierte Schaltkupplung SK4 in der hinteren Stellung S8.

Im einzelnen verläuft der Leistungsflusses aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16 und
- über die siebte Zahnradebene ZE7
auf die Getriebeausgangswelle 20.

Im einzigen Rückwärtsgang R1 ist
- die zweite Lastschaltkupplung K2 eingerückt,
- die erste Schaltkupplung SK1 in der Neutralstellung,
- die zweite Schaltkupplung SK2 in der vorderen Stellung S3,
- die dritte Schaltkupplung SK3 in der Neutralstellung und
- die vierte Schaltkupplung SK4 in der vorderen Stellung S7.

Der Rückwärtsgang R1 ist dabei nicht als gewundener Gang ausgeführt. Da der nachfolgend beschriebene Leistungsfluss über die zweite Lastschaltkupplung K2 verläuft, ist eine zugkraftunterbrechungsfreie Schaltung zwischen dem über die erste Lastschaltkupplung K1 verlaufenden ersten Vorwärtsgang V1 und dem Rückwärtsgang R1 möglich. Der besagte Leistungsfluss verläuft aufeinanderfolgend
- von der Getriebeeingangswelle 10,
- über die zweite Lastschaltkupplung K2,
- über die zweite Zwischenwelle 12,
- über die zweite Getriebekonstante C2,
- über einen vorderen Teilbereich der Hohlwelle 13 und
- über die dem Rückwärtsgang R2 zugeordnete vierte Zahnradebene ZE4
- über die Zwischenwelle 34 und
- als letzte Übersetzungsstufe über die fünfte Zahnradebene ZE5
auf die Getriebeausgangswelle 20.

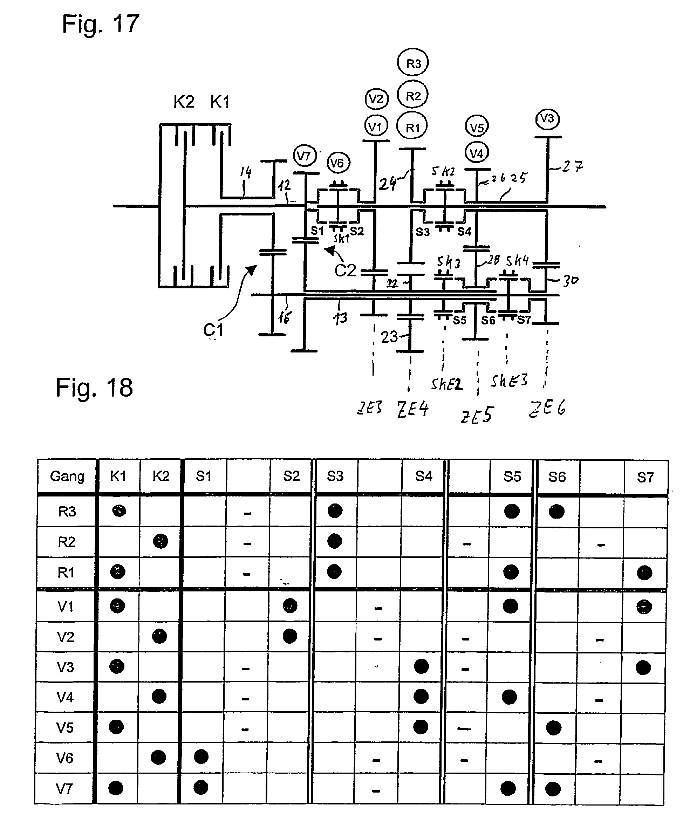

Fig. 17 zeigt ein Doppelkupplungsgetriebe in einer vierten Ausführungsform.

Der Aufbau dieses Doppelkupplungsgetriebes ist von vorne bis zur vierten Zahnradebene ZE4 identisch der ersten Ausführungsform, weshalb hier auf letztere verwiesen wird.

In der dieser Zahnradebene ZE4 folgenden Schaltkupplungsebene SKE2 ist die Schaltkupplung SK2 ebenfalls identisch der ersten Ausführungsform. Im Gegensatz zur ersten Ausführungsform ist jedoch in dieser Schaltkupplungsebene SKE2 zusätzlich eine dritte Schaltkupplung SK3 angeordnet, welche als "halbe" Schaltkupplung SK3 ausgeführt ist. Diese weist neben der Neutralstellung ausschließlich eine Stellung zur Herstellung einer drehfesten Verbindung auf. Dabei handelt es sich um die Stellung S5 zur Herstellung einer drehfesten Verbindung zwischen der ersten Hohlwelle 13 und einem Losrad 28, welches in einer Zahnradebene ZE5 drehbar und koaxial auf der Hohlwelle 13 des zweiten Teilgetriebes 52 an deren Ende angeordnet ist.

Ein mit diesem Losrad 28 in der Zahnradebene ZE5 kämmendes Losrad 26 ist drehbar und koaxial auf der Getriebeausgangswelle 20 angeordnet. Dieses Losrad 26 ist mittels einer zweiten Hohlwelle 25 drehfest mit einem Zahnrad 27 verbunden, welches demzufolge als Losrad ebenfalls koaxial und drehbar auf der Getriebeausgangswelle 20 angeordnet ist.

Letzteres Zahnrad 27 kämmt in einer sechsten und letzten Zahnradebene ZE6 mit einem Losrad 30, welches drehbar und koaxial auf der Innenwelle 16 an deren hinterem Ende angeordnet ist.

Zwischen der fünften Zahnradebene ZE5 und der sechsten Zahnradebene ZE6 liegt eine dritte Schaltkupplungsebene SKE3 mit einer Schaltkupplung SK4. Wird die Schaltkupplung SK4 nach vorne verschoben, so stellt diese in einer Stellung S6 eine drehfest Verbindung zwischen der Innenwelle 16 und dem Losrad 28 her. Die dazwischen angeordnete Hohlwelle 13 bleibt dabei drehbar gegenüber der Innenwelle 16 und dem Losrad 28. Wird die Schaltkupplung SK1 hingegen nach hinten verschoben, so stellt diese eine drehfest Verbindung zwischen der Innenwelle 16 und dem Losrad 30 her.

Fig. 18 zeigt ein Schaltschema des Doppelkupplungsgetriebes gemäß Fig. 17. Dieses Schaltschema wird im folgenden für die einzelnen Gänge V1 bis V7 und R1 bis R3 beschrieben:

Im ersten Vorwärtsgang V1 ist
- die erste Lastschaltkupplung K1 eingerückt,
- die erste Schaltkupplung SK1 in der hinteren Stellung S2,
- die zweite Schaltkupplung SK2 in der Neutralstellung,
- die dritte Schaltkupplung SK3 in eingerückten, d.h. in der hinteren Stellung S5 und
- die vierte Schaltkupplung SK4 in der hinteren Stellung S7.

Der erste Vorwärtsgang V1 ist ein gewundener Gang. Der Leistungsfluss verläuft dabei axial
- zuerst fünf Zahnradebenen nach hinten,
- dann drei Zahnradebenen nach vorne und
- im Anschluss bis zum Getriebeabtrieb.

Im einzelnen verläuft der Leistungsfluss aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über die sechste Zahnradebene ZE6,
- über die zweite Hohlwelle 25,
- über die fünfte Zahnradebene ZE5,
- über einen Teilbereich der ersten Hohlwelle 13 und
- über die dritte Zahnradebene ZE3
auf die Getriebeausgangswelle 20.

Im zweiten Vorwärtsgang V2 ist
- die zweite Lastschaltkupplung K2 eingerückt,
- die erste Schaltkupplung SK1 in der hinteren Stellung S2,
- die zweite Schaltkupplung SK2 in der Neutralstellung,
- die dritte Schaltkupplung SK3 ebenfalls in der Neutralstellung und
- die vierte Schaltkupplung SK4 ebenfalls in der Neutralstellung.

Demzufolge ist ausschließlich die erste Schaltkupplung SK1 eingerückt.

Der zweite Vorwärtsgang V2 ist dabei nicht als gewundener Gang ausgeführt. Der Leistungsfluss des zweiten Vorwärtsganges V2 verläuft demzufolge aufeinanderfolgend
- von der Getriebeeingangswelle 10,
- über die zweite Lastschaltkupplung K2,
- über die zweite Zwischenwelle 12,
- über die zweite Getriebekonstante C2,
- über einen vorderen Teilbereich der Hohlwelle 13 und
- als letzte Übersetzungsstufe ebenso wie beim ersten Vorwärtsgang V1 über die dritte Zahnradebene ZE3
auf die Getriebeausgangswelle 20.

Im dritten Vorwärtsgang V3 ist
- die erste Lastschaltkupplung K1 eingerückt,
- die erste Schaltkupplung SK1 in der Neutralstellung,
- die zweite Schaltkupplung SK2 in der hinteren Stellung S4,
- die dritte Schaltkupplung SK3 in der Neutralstellung und
- die vierte Schaltkupplung SK4 in der hinteren Stellung S7.

Der dritte Vorwärtsgang V3 ist dabei nicht als gewundener Gang ausgeführt. Der Leistungsfluss des dritten Vorwärtsganges V3 verläuft demzufolge aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über die sechste Zahnradebene ZE6,
- über die Hohlwelle 25,
auf die Getriebeausgangswelle 20.

Im vierten Vorwärtsgang V4 ist
- die zweite Lastschaltkupplung K2 eingerückt,
- die erste Schaltkupplung SK1 in der Neutralstellung,
- die zweite Schaltkupplung SK2 in der hinteren Stellung S4,
- die dritte Schaltkupplung SK3 in der hinteren Stellung S5 und
- die vierte Schaltkupplung SK4 in der Neutralstellung.

Der vierte Vorwärtsgang V4 ist dabei nicht als gewundener Gang ausgeführt. Der Leistungsfluss des vierten Vorwärtsganges V4 verläuft demzufolge aufeinanderfolgend
- von der Getriebeeingangswelle 10,
- über die zweite Lastschaltkupplung K2,
- über die zweite Zwischenwelle 12,
- über die zweite Getriebekonstante C2,
- über die Hohlwelle 13 und
- als zweite und letzte Übersetzungsstufe über die fünfte Zahnradebene ZE5
auf die Getriebeausgangswelle 20.

Im fünften Vorwärtsgang V5 ist
- die erste Lastschaltkupplung K1 eingerückt,
- die erste Schaltkupplung SK1 in der Neutralstellung,
- die zweite Schaltkupplung SK2 in der hinteren Stellung S4,
- die dritte Schaltkupplung SK3 in der Neutralstellung und
- die vierte Schaltkupplung SK4 in der vorderen Stellung S6.

Der fünfte Vorwärtsgang V5 ist dabei nicht als gewundener Gang ausgeführt. Der Leistungsfluss des fünften Vorwärtsganges V5 verläuft demzufolge aufeinanderfolgend
- von der Getriebeeingangswelle 10,
- über die erste Lastschaltkupplung K1,
- über die erste Zwischenwelle 14,
- über die erste Getriebekonstante C1,
- über einen Großteil der Innenwelle 16 und
- ebenso, wie im vierten Vorwärtsgang V4 als zweite und letzte Übersetzungsstufe über die fünfte Zahnradebene ZE5
   auf die Getriebeausgangswelle 20.

Im sechsten Vorwärtsgang V6 ist die zweite Lastschaltkupplung K2 eingerückt. Ebenso, wie im Fall des zweiten Vorwärtsganges V2, ist auch im sechsten Vorwärtsgang V6 ausschließlich eine Schaltkupplung eingerückt. Dies ist im Falle des sechsten Vorwärtsgang V6 ebenfalls die erste Schaltkupplung SK1, die sich jedoch in der vorderen Stellung S1 befindet. Die übrigen drei Schaltkupplungen SK2, SK3, SK4 befinden sich in der Neutralstellung. Es ist ersichtlich, dass der sechste Vorwärtsgang V6 als direkter Vorwärtsgang ausgeführt ist. Bei diesem direktem Vorwärtsgang ist die zweite Zwischenwelle 12 drehfest mit der Getriebeausgangswelle 20 verbunden, so dass der sechste Vorwärtsgang V6 ein Übersetzungsverhältnis von 1:1 aufweist.

Im siebten Vorwärtsgang V7 ist
- die erste Lastschaltkupplung K1 eingerückt,
- die erste Schaltkupplung SK1 in der vorderen Stellung S1,
- die zweite Schaltkupplung SK2 in der Neutralstellung,
- die dritte Schaltkupplung SK3 in der hinteren Stellung S5 und
- die vierte Schaltkupplung SK4 in der vorderen Stellung S6.

Der siebte Vorwärtsgang V7 ist dabei kein gewundener Gang. Jedoch verläuft der Leistungsfluss ebenso wie im Falle des ersten Vorwärtsganges V1 in einem Teilbereich axial hin und zurück. Der Leistungsfluss verläuft dabei axial
- zuerst vier Zahnradebenen nach hinten,
- dann drei Zahnradebenen nach vorne und
- im Anschluss bis zum Getriebeabtrieb.

Im einzelnen verläuft der Leistungsflusses aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über die Schaltkupplungen SK4, welche die Innenwelle 16 über das Hohlrad 28 und die Schaltkupplung SK3 drehfest mit der ersten Hohlwelle 13 an deren hinterem Ende koppelt
- über die Hohlwelle 13 und
- als letzte Übersetzungsstufe über die zweite Zahnradebene ZE2, in welcher die Getriebekonstante C2 liegt,
auf die Getriebeausgangswelle 20.

Im ersten Rückwärtsgang R1 ist
- die erste Lastschaltkupplung K1 eingerückt,
- die erste Schaltkupplung SK1 in der Neutralstellung,
- die zweite Schaltkupplung SK2 in der vorderen Stellung S3,
- die dritte Schaltkupplung SK3 in der eingerückten, d.h. in der hinteren Stellung S5 und
- die vierte Schaltkupplung SK4 in der hinteren Stellung S7.

Der erste Rückwärtsgang R1 ist ein gewundener Gang. Der Leistungsfluss verläuft dabei axial
- zuerst fünf Zahnradebenen nach hinten,
- dann zwei Zahnradebenen nach vorne und
- im Anschluss bis zum Getriebeabtrieb.

Im einzelnen verläuft der Leistungsfluss aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über die sechste Zahnradebene ZE6,
- über die zweite Hohlwelle 25 und
- über die fünfte Zahnradebene ZE5
- über die vierte Zahnradebene ZE4
auf die Getriebeausgangswelle 20.

Damit verläuft der Leistungsfluss des ersten Rückwärtsganges R1 ähnlich dem Leistungsfluss des ersten Vorwärtsganges V1, so dass sich ein nahezu gleiches Übersetzungsverhältnis ergibt.

Im zweiten Rückwärtsgang R2 ist
- die zweite Lastschaltkupplung K2 eingerückt,
- die erste Schaltkupplung SK1 in der Neutralstellung,
- die zweite Schaltkupplung SK2 in der vorderen Stellung S3,
- die dritte Schaltkupplung SK3 in der Neutralstellung und
- die vierte Schaltkupplung SK4 in der Neutralstellung. Demzufolge ist ausschließlich die zweite Schaltkupplung SK2 eingerückt.

Der zweite Rückwärtsgang R2 ist dabei nicht als gewundener Gang ausgeführt. Der Leistungsfluss des zweiten Rückwärtsganges R2 verläuft demzufolge aufeinanderfolgend
- von der Getriebeeingangswelle 10,
- über die zweite Lastschaltkupplung K2,
- über die zweite Zwischenwelle 12,
- über die zweite Getriebekonstante C2,
- über einen vorderen Teilbereich der Hohlwelle 13 und
- als letzte Übersetzungsstufe ebenso wie beim ersten Rückwärtsgang R1 über die drei Zahnräder 22, 23, 24 der vierten Zahnradebene ZE4
auf die Getriebeausgangswelle 20.

Im dritten Rückwärtsgang R3 ist
- die erste Lastschaltkupplung K1 eingerückt,
- die erste Schaltkupplung SK1 in der-Neutralstellung,
- die zweite Schaltkupplung SK2 in der vorderen Stellung S3,
- die dritte Schaltkupplung SK3 in der eingerückten, d.h. hinteren Stellung S5 und
- die vierte Schaltkupplung SK4 in der vorderen Stellung S6.

Der dritte Rückwärtsgang R3 ist dabei nicht als gewundener Gang ausgeführt. Der Leistungsfluss des dritten Rückwärtsganges R3 verläuft demzufolge aufeinanderfolgend
- von der Getriebeeingangswelle 10,
- über die erste Lastschaltkupplung K1,
- über die erste Zwischenwelle 14,
- über die erste Getriebekonstante C1,
- über die Innenwelle 16,
- über das Zahnrad 28 auf die Hohlwelle 13,
- als letzte Übersetzungsstufe ebenso wie beim ersten Rückwärtsgang R1 und R2 über die drei Zahnräder 22, 23, 24 der vierten Zahnradebene ZE4
   auf die Getriebeausgangswelle 20.

Sämtliche Festräder und Losräder sind in den Ausgestaltungsbeispielen bevorzugt als schrägverzahnte oder geradverzahnte Zahnräder ausgeführt.

Beim Schaltverfahren des Doppelkupplungsgetriebes kann optional kann in einzelnen Gängen mindestens eine für die Realisierung des jeweiligen Ganges nicht aktiv benötigte Schaltkupplung eingelegt bleiben, so dass auf diese Weise die Anzahl der bei einem Gangwechsel zu betätigenden Schaltkupplungen gering gehalten werden kann.

Bei dem Doppelkupplungsgetriebe kann eine Gangprognostizier- und Gangvorwahleinrichtung vorgesehen sein, mittels der im lastfreien Teilgetriebe 52 bzw. 54 eine Gangwahl stattfindet, obwohl noch kein Schaltwunsch erging.

Das Doppelkupplungsgetriebe kann in einer alternativen Ausgestaltung eine gerade Anzahl von Vorwärtsgängen aufweisen.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen. Insbesondere die prinzipiellen Größenverhältnisse der Zahnräder und Zahnradpaarungen zueinander sind der Zeichnung zu entnehmen.

## Patentansprüche

1. Doppelkupplungsgetriebe in Windungsanordnung, welches zwei koaxial zueinander angeordnete Vorgelegewellen (16, 13) aufweist, wobei der Leistungsfluss eines Rückwärtsgangs (R1) über mehr als zwei Übersetzungsstufen (ZE1, ZE6, ZE5, ZE4) verläuft,
wobei zumindest ein weiterer Rückwärtsgang (R2) vorgesehen ist,
**dadurch gekennzeichnet,**
**dass** sieben Vorwärtsgänge (G1 bis G7) und drei Rückwärtsgänge (R1 bis R3) ausschließlich mittels vier Schaltkupplungen (SK1 bis SK4) einlegbar sind.

2. Doppelkupplungsgetriebe nach Patentanspruch 1,
**dadurch gekennzeichnet,**
**dass** der Leistungsfluss des weiteren Rückwärtsganges ebenfalls über mehr als zwei Verzahnungsstufen verläuft.

3. Doppelkupplungsgetriebe nach einem der vorhergehenden Patentansprüche,
**dadurch gekennzeichnet,**
**dass** ein erster Vorwärtsgang (V1) mit dem größten Übersetzungsverhältnis über mehr als zwei Übersetzungsstufen (ZE1, ZE6, ZE5, ZE4) verläuft.

4. Doppelkupplungsgetriebe nach einem der vorhergehenden Patentansprüche,
**dadurch gekennzeichnet,**
**dass** der Leistungsfluss mindestens eines Rückwärtsganges (R1) über mehr als drei Verzahnungsstufen (ZE1, ZE6, ZE5, ZE4) verläuft.

5. Doppelkupplungsgetriebe nach einem der vorhergehenden Patentansprüche,
**dadurch gekennzeichnet,**
**dass** ein Stufensprung ϕ_{R1-R2} zwischen
- dem ersten Rückwärtsgang (R1) mit dem vom Betrag gesehen größten Rückwärtsgangübersetzungsverhältnis i_{R1} und
- dem zweiten Rückwärtsgang (R2) mit dem vom Betrag gesehen nächstkleineren Rückwärtsgangübersetzungsverhältnis i_{R2}
- dem Stufensprung ϕ₁₋₂ zwischen den beiden ersten Vorwärtsgängen (V1 und V2) mit den größten Übersetzungsverhältnissen
entspricht.

6. Doppelkupplungsgetriebe nach einem der vorhergehenden Patentansprüche,
**dadurch gekennzeichnet ,**
**dass** der Stufensprung (ϕ_{R2-R3} zwischen
- dem zweiten Rückwärtsgang (R2) mit dem vom Betrag gesehen zweitgrößten Rückwärtsgangübersetzungsverhältnis i_{R2} und
- dem dritten Rückwärtsgang (R3) mit dem vom Betrag gesehen nächstkleineren Rückwärtsgangübersetzungsverhältnis i_{R3} dem Stufensprung ϕ₂₋₃ zwischen
- dem zweiten Vorwärtsgang (V2) mit zweitgrößten Übersetzungsverhältnis i₂ und
- dem dritten Vorwärtsgang (V3) mit drittgrößten Übersetzungsverhältnis i₃
entspricht.

7. Doppelkupplungsgetriebe nach einem der vorhergehenden Patentansprüche,
**dadurch gekennzeichnet,**
**dass** der im Leistungsfluss über mehr als drei Verzahnungsstufen verlaufende Rückwärtsgang (R1) der Rückwärtsgang (R1) mit dem niedrigsten Rückwärtsgangübersetzungsverhältnis i_{R3} ist.

8. Doppelkupplungsgetriebe nach einem der vorhergehenden Patentansprüche,
**dadurch gekennzeichnet,**
**dass** zumindest zwei Rückwärtsgänge derart angeordnet sind, dass zwischen diesen mittels Überschneidungswechsel von einer Lastschaltkupplung (K1 bzw. K2) der Doppelkupplung auf die andere Lastschaltkupplung (K2 bzw. K1) geschaltet werden kann.

9. Doppelkupplungsgetriebe nach einem der vorhergehenden Patentansprüche,
**dadurch gekennzeichnet,**
**dass** zur Drehrichtungsumkehr in sämtlichen Rückwärtsgängen (R1, R2, R3) ein einziges Zwischenzahnrad (23) vorgesehen ist.

10. Doppelkupplungsgetriebe nach Patentanspruch 9,
**dadurch gekennzeichnet,**
**dass** zur Drehrichtungsumkehr in sämtlichen Rückwärtsgängen (R1, R2, R3) eine Zwischenwelle (34) vorgesehen ist, welche den Leistungsfluss über ein Übersetzungsverhältnis von einer Verzahnung (23) auf eine axial benachbarte andere Verzahnung (33) überträgt.

11. Doppelkupplungsgetriebe nach einem der vorhergehenden Patentansprüche,
**dadurch gekennzeichnet,**
**dass** das Doppelkupplungsgetriebe zwei Getriebekonstanten (C1, C2) aufweist und dass der Leistungsfluss in zumindest einem Getriebegang (V7) sowohl über die erste Getriebekonstante (C1), als auch über die als Übersetzungsstufe genutzte zweite Getriebekonstante (C2) verläuft.

12. Doppelkupplungsgetriebe nach Patentanspruch 11,
**dadurch gekennzeichnet ,**
**dass** die als zweite Übersetzungsstufe genutzte Getriebekonstante (C2) im zuvor genannten Getriebegang (V7) mittels einer Schaltkupplung (SK1) mit einer koaxial zu einem Antriebszahnrad (11) der zweiten Getriebekonstanten (C2) angeordneten Getriebeausgangswelle (20) gekoppelt ist, wobei die selbe Schaltkupplung (SK1) auch für das Einlegen eines direkten Gang (V6) vorgesehenen ist.

13. Doppelkupplungsgetriebe nach einem der vorhergehenden Patentansprüche,
**dadurch gekennzeichnet,**
**dass** einer der Vorwärtsgänge - insbesondere der höchste, der zweithöchste, oder der dritthöchste - als Direktgang ausgeführt ist.

14. Doppelkupplungsgetriebe nach einem der vorhergehenden Patentansprüche,
**dadurch gekennzeichnet ,**
**dass** eine dem Antrieb näher stehende erste Getriebekonstante (C1) ein größeres Antriebszahnrad aufweist als die axial dahinter angeordnete zweite Getriebekonstante (C2).

15. Doppelkupplungsgetriebe nach einem der vorhergehenden Patentansprüche,
**dadurch gekennzeichnet ,**
**dass** der Leistungsfluss
- sowohl im ersten Vorwärtsgang (V1) mit dem höchsten Übersetzungsverhältnis
- als auch im zweiten Vorwärtsgang (V2) mit dem zweithöchsten Übersetzungsverhältnis
über dieselbe letzte Übersetzungsstufe (ZE3) verläuft.

16. Doppelkupplungsgetriebe nach einem der vorhergehenden Patentansprüche,
**dadurch gekennzeichnet ,**
**dass** der Leistungsfluss in zwei Vorwärtsgängen, welche oberhalb des zweiten Vorwärtsganges liegen, über unterschiedliche Getriebekonstanten, aber dieselbe Zahnradstufe verläuft.

17. Doppelkupplungsgetriebe nach einem der vorhergehenden Patentansprüche,
**dadurch gekennzeichnet ,**
**dass** für die Verwirklichung von sieben Vorwärts- (V1 bis V7) und mindestens einem Rückwärtsgang (R1 bis R3) vier Schaltkupplungen (SK1 bis SK4) vorgesehen sind, die jeweils in zwei eingerückte (S1 bis S8) sowie eine neutrale Stellung betätigt werden können.

18. Doppelkupplungsgetriebe nach einem der Patentansprüche 1 bis 16,
**dadurch gekennzeichnet ,**
**dass** für die Verwirklichung von sieben Vorwärtsgängen (V1 bis V7) und mindestens einem Rückwärtsgang (R1 bis R3) vier Schaltkupplungen (SK1 bis SK4) vorgesehen sind, von denen drei jeweils in zwei eingerückte (S1, S2, S3, S4, S6, S7) sowie eine neutrale Stellung und eine weitere Schaltkupplung in eine eingerückte (S5) und eine neutrale Stellung betätigt werden können.

19. Doppelkupplungsgetriebe nach einem der vorhergehenden Patentansprüche,
**dadurch gekennzeichnet ,**
**dass** sieben Vorwärtsgänge (V1 bis V7), zumindest ein Rückwärtsgang (R1 bis R3) und ausschließlich vier Schaltkupplungsebenen (SKE1 bis SKE4) vorgesehen sind.

20. Doppelkupplungsgetriebe nach einem der vorhergehenden Patentansprüche,
**dadurch gekennzeichnet ,**
**dass** ein Schaltvorgang zwischen zwei benachbarten Vorwärtsgängen (V1, V2 in Fig. 2) mittels Ausrückens maximal einer Schaltkupplung (SKE3) oder Einrückens einer anderen Schaltkupplung durchführbar ist.

21. Doppelkupplungsgetriebe nach einem der vorhergehenden Patentansprüche,
**dadurch gekennzeichnet ,**
**dass** eine in einem Gang (Vorwärtsgang V2 in der Alternative der ersten Ausführungsform) außerhalb des Leistungsflusses befindliche Schaltkupplung (SK4) eine drehfeste Verbindung zwischen zwei Getriebegliedern (Innenwelle 16, Zahnrad 29 in Fig. 1) herstellt.

22. Doppelkupplungsgetriebe nach Patentanspruch 21,
**dadurch gekennzeichnet,**
**dass** diese besagte Schaltkupplung (SK4) in einem dem besagten Gang (Vorwärtsgang V2 in der Alternative der ersten Ausführungsform) sequentiell folgenden Gang (Vorwärtsgang V3 in der Alternative der ersten Ausführungsform) innerhalb des Leistungsflusses liegt.

23. Verfahren zum Schalten eines Doppelkupplungsgetriebes nach einem der vorhergehenden Patentansprüche,
**dadurch gekennzeichnet,**
**dass** für einen sequentiellen Gangwechsel von einem Quellgang (V1 in Fig. 2) zu einem Zielgang (V2 in Fig. 2) höchstens ein Schaltkupplung (SK3) betätigt wird.

24. Verfahren zum Schalten eines Doppelkupplungsgetriebes nach Patentanspruch 23,
**dadurch gekennzeichnet,**
**dass** eine im Quellgang (V1 in Fig. 2) im Leistungsfluss liegende und im Zielgang (V2 in Fig. 2) außerhalb des Leistungsflusses liegende Schaltkupplung (SK4 in V2 von Alternative der ersten Ausführungsform) nach durchgeführter Schaltung in den Zielgang (V2 in Fig. 2) in der eingerückten Stellung (S7) verbleibt.

## Claims

1. Twin-clutch gearbox in a winding arrangement, comprising two coaxially arranged layshafts (16, 13), wherein the power flow of a reverse gear (R1) runs across more than two transfer stages (ZE1, ZE6, ZE5, ZE4), wherein at least one further reverse gear (R2) is provided, **characterised in that**
seven forward gears (G1 to G7) and three reverse gears (R1 to R3) can exclusively be engaged by means of four shift clutches (SK1 to SK4).

2. Twin-clutch gearbox according to claim 1,
**characterised in that**
the power flow of the further reverse gear likewise runs across more than two gear stages.

3. Twin-clutch gearbox according to any of the preceding claims, **characterised in that**
a first forward gear (V1) with the highest ratio extends across more than two transfer stages (ZE1, ZE6, ZE5, ZE4).

4. Twin-clutch gearbox according to any of the preceding claims, **characterised in that**
the power flow of at least one reverse gear (R1) runs across more than three gear stages (ZE1, ZE6, ZE5, ZE4).

5. Twin-clutch gearbox according to any of the preceding claims, **characterised in that**
a progressive ratio ϕ_{R1-R2} between
- the first reverse gear (R1) with the highest reverse gear ratio i_{R1} in terms of amount and
- the second reverse gear (R2) with the next lower reverse gear ratio i_{R2} in terms of amount
corresponds
- to the progressive ratio ϕ₁₋₂ between the two first forward gears (V1 and V2) with the highest ratios.

6. Twin-clutch gearbox according to any of the preceding claims, **characterised in that**
the progressive ratio ϕ_{R2-R3} between
- the second reverse gear (R2) with the second highest reverse gear ratio i_{R2} in terms of amount and
- the third reverse gear (R3) with the next lower reverse gear ratio i_{R3} in terms of amount
corresponds to the progressive ratio ϕ₂₋₃ between
- the second forward gear (V2) with the second highest ratio i₂ and
- the third forward gear (V3) with the third highest ratio i₃.

7. Twin-clutch gearbox according to any of the preceding claims, **characterised in that**
the reverse gear (R1) with a power flow running across more than three gear stages is the reverse gear (R1) with the lowest reverse gear ratio i_{R3}.

8. Twin-clutch gearbox according to any of the preceding claims, **characterised in that**
at least two reverse gears are arranged such that it is possible to change from one load-changeable clutch (K1 or K2) of the twin clutch to the other load-changeable clutch (K2 or K1) by means of concurrent change.

9. Twin-clutch gearbox according to any of the preceding claims, **characterised in that**
a single intermediate gear (23) is provided in all reverse gears (R1, R2, R2) for reversal of rotation.

10. Twin-clutch gearbox according to claim 9,
**characterised in that**
an intermediate shaft (34) is provided in all reverse gears (R1, R2, R2) for reversal of rotation to transmit the power flow from one gearing (23) to an axially adjacent gearing (33) via a ratio.

11. Twin-clutch gearbox according to any of the preceding claims, **characterised in that**
the twin-clutch gearbox has two transmission constants (C1, C2), and **in that** the power flow runs in at least one gear (V7) both across the first transmission constant (C1) and across the second transmission constant (C2), which is used as a transfer stage.

12. Twin-clutch gearbox according to claim 11,
**characterised in that** the transmission constant (C2) used as a second transfer stage is in the above gear (V7) coupled to a gearbox output shaft (20) coaxial with a drive gear (11) of the second transmission constant (C2), the same shift clutch (SK1) being provided for the engagement of a direct drive (V6).

13. Twin-clutch gearbox according to any of the preceding claims, **characterised in that**
one of the forward gears - in particular the highest, the second highest or the third highest - is designed as a direct drive.

14. Twin-clutch gearbox according to any of the preceding claims, **characterised in that**
a first transmission constant (C1) which is closer to the drive has a larger drive gear than the second transmission constant (C2) disposed axially behind the former.

15. Twin-clutch gearbox according to any of the preceding claims, **characterised in that**
the power flow runs across the same last transfer stage (ZE3)
- both in the first forward gear (V1) with the highest ratio
- and in the second forward gear (V2) with the second highest ratio.

16. Twin-clutch gearbox according to any of the preceding claims, **characterised in that**
the power flow runs in two forward gears above the second forward gear across different transmission constants, but across the same gear stage.

17. Twin-clutch gearbox according to any of the preceding claims, **characterised in that**
in order to implement seven forward gears (V1 to V7) and at least one reverse gear (R1 to R3), four shift clutches (SK1 to SK4) are provided, each of which can be moved into two engaged positions (S1 to S8) and a neutral position.

18. Twin-clutch gearbox according to any of claims 1 to 16, **characterised in that**
in order to implement seven forward gears (V1 to V7) and at least one reverse Gear (R1 to R3), four shift clutches (SK1 to SK4) are provided, of which three can be moved into two engaged positions (S1, S2, S3, S4, S6, S7) and a neutral position and of which one further shift clutch can be moved into one engaged position (S5) and a neutral position.

19. Twin-clutch gearbox according to any of the preceding claims, **characterised in that**
seven forward gears (V1 to V7), at least one reverse gear (R1 to R3) and four shift clutch planes (SKE1 to SKE4) are provided.

20. Twin-clutch gearbox according to any of the preceding claims, **characterised in that**
a gear change between two adjacent forward gears (V1, V2 in Fig. 2) can be executed by disengaging maximally one shift clutch (SK3) and engaging another shift clutch.

21. Twin-clutch gearbox according to any of the preceding claims, **characterised in that**
a shift clutch (SK4) which is outside the power flow in one gear (V2 in the alternative to the first embodiment) establishes a non-rotational connection between two gearbox elements (inner shaft 16, gear 29 in Fig. 1).

22. Twin-clutch gearbox according to claim 21,
**characterised in that**
the said shift clutch (SK4) is within the power flow in a gear (forward gear V3 in the alternative to the first embodiment) which sequentially follows the said gear (V2 in the alternative to the first embodiment).

23. Method for changing gear in a twin-clutch gearbox according to any of the preceding claims,
**characterised in that**
for a sequential gear change from an original gear (V1 in Fig. 2) to a target gear (V2 in Fig. 2), only one shift clutch (SK3) is actuated.

24. Method for changing gear in a twin-clutch gearbox according to claim 23, **characterised in that**
a shift clutch (SK4 in V2 of the alternative to the first embodiment) which lies in the power flow in the original gear (V1 in Fig. 2) and outside the power flow in the target gear (V2 in Fig. 2) remains in the engaged position (S7) on completion of a gear change into the target gear (V2 in Fig. 2).

## Revendications

1. Boîte de vitesses à double embrayage à disposition enroulée, présentant deux arbres de renvoi (16, 13) disposés coaxialement l'un par rapport à l'autre, le flux de puissance d'une marche arrière (R1) passant par plus de deux étages de multiplication d'engrenage (ZE1, ZE6, ZE5, ZE4), au moins une autre marche arrière (R2) étant prévu, **caractérisée en ce que** sept marches avant (G1 à G7) et trois marches arrière (R1 à R3) peuvent être engagées exclusivement au moyen de quatres embrayages (SK1 à SK4).

2. Boîte de vitesses à double embrayage selon la revendication 1, **caractérisée en ce que** le flux de puissance de l'autre marche arrière passe également par plus de deux étages d'engrenage.

3. Boîte de vitesses à double embrayage selon l'une quelconque des revendications précédentes, **caractérisée en ce qu'**une première marche avant (V1) avec le plus grand rapport de transmission passe par plus de deux étages de multiplication (ZE1, ZE6, ZE5, ZE4).

4. Boîte de vitesses à double embrayage selon l'une quelconque des revendications précédentes, **caractérisée en ce que** le flux de puissance d'au moins une marche arrière (R1) passe par sur plus de trois étages d'engrenage (ZE1, ZE6, ZE5, ZE4).

5. Boîte de vitesses à double embrayage selon l'une quelconque des revendications précédentes, **caractérisée en ce qu'**un écart ϕ_{R2-R3} entre
- la première marche arrière (R1) avec le rapport de multiplication de marche arrière iᵣ₁ le plus grand d'un point de vue de la valeur et
- la seconde marche arrière (R2) avec le rapport de multiplication de marche arrière iᵣ₂ le plus petit d'un point de vue de la valeur
correspond à
- l'écart ϕ₁₋₂ entre les deux premières marches avant (V1 et V2) avec les rapports de multiplication les plus grands

6. Boîte de vitesses à double embrayage selon l'une quelconque des revendications précédentes, **caractérisée en ce que** l'écart ϕ_{R2-R3} entre
- la seconde marche arrière (R2) avec le deuxième rapport de multiplication de marche arrière i_{R2} le plus grand d'un point de vue de la valeur et
- la troisième marche arrière (R3) avec le plus petit rapport de multiplication de marche arrière i_{R3} d'un point de vue de la valeur
correspond à l'écart ϕ₂₋₃ entre
- la deuxième marche avant (V2) avec le deuxième rapport de multiplication i₂ le plus grand et
- la troisième marche avant (V3) avec le troisième rapport de multiplication i₃ le plus grand.

7. Boîte de vitesses à double embrayage selon l'une quelconque des revendications précédentes, **caractérisée en ce que** la marche arrière (R1) s'étendant dans le flux de puissance sur plus de trois étages d'engrenage est la marche arrière (R1) avec le rapport de multiplication de marche arrière i_{R3} le plus petit.

8. Boîte de vitesses à double embrayage selon l'une quelconque des revendications précédentes, **caractérisée en ce qu'**au moins deux marches arrière sont disposées de telle sorte qu'entre celles-ci au moyen d'un changement d'imbrication d'un embrayage couplable sous charge (K1 ou K2) du double embrayage il est possible de passer à l'autre embrayage couplable sous charge (K2 ou K1).

9. Boîte de vitesses à double embrayage selon l'une quelconque des revendications précédentes, **caractérisée en ce que** pour l'inversion du sens de rotation dans l'ensemble des marches arrière (R1, R2, R3) il est prévu un seul pignon intermédiaire (23).

10. Boîte de vitesses à double embrayage selon la revendication 9, **caractérisée en ce que** pour l'inversion du sens de rotation dans l'ensemble des marches arrière (R1, R2, R3) il est prévu un arbre de renvoi secondaire (34) qui transfère le flux de puissance par un rapport de multiplication d'un engrenage (23) à un autre engrenage (33) adjacent axialement.

11. Boîte de vitesses à double embrayage selon l'une quelconque des revendications précédentes, **caractérisée en ce que** la boîte de vitesses à double embrayage présente deux constantes de transmission (C1, C2) et **en ce que** le flux de puissance passe dans au moins un rapport de transmission (V7) ainsi que par la première constante de transmission (C1) et également par la deuxième constante de transmission (C2) utilisée comme étage de multiplication.

12. Boîte de vitesses à double embrayage selon la revendication 11, **caractérisée en ce que** la constante d'engrenage (C2) utilisée comme deuxième étage de multiplication dans le rapport de transmission (V7) susmentionné est couplée au moyen d'un embrayage (SK1) à un arbre de sortie (20) disposé axialement par rapport à un pignon d'entraînement (11) de la deuxième constante d'engrenage, le même embrayage (SK1) étant prévu également pour l'engagement d'un rapport direct (V6).

13. Boîte de vitesses à double embrayage selon l'une quelconque des revendications précédentes, **caractérisée en ce que** l'une des marches avant - en particulier la plus haute, la deuxième plus haute ou la troisième plus haute - est conçue comme une vitesse directe.

14. Boîte de vitesses à double embrayage selon l'une quelconque des revendications précédentes, **caractérisée en ce qu'**une première constante d'engrenage (C1) se trouvant à proximité de l'entraînement présente un pignon d'entraînement plus grand que la deuxième constante d'engrenage (C2) disposé axialement derrière.

15. Boîte de vitesses à double embrayage selon l'une quelconque des revendications précédentes, **caractérisée en ce que** le flux de puissance
- tant dans la première marche avant (V1) avec le rapport de multiplication le plus haut
- que dans la seconde marche avant (V2) avec le deuxième rapport de multiplication le plus haut
passe par le dernier rapport de multiplication (ZE3).

16. Boîte de vitesses à double embrayage selon l'une quelconque des revendications précédentes, **caractérisée en ce que** le flux de puissance dans les deux marches avant, qui se trouvent au-dessus de la deuxième marche avant, passe par différentes constantes d'engrenage mais par le même étage d'engrenage.

17. Boîte de vitesses à double embrayage selon l'une quelconque des revendications précédentes, **caractérisée en ce que** pour la réalisation de sept marches avant (V1 à V7) et d'au moins une marche arrière (R1 à R3) il est prévu quatres embrayages (SK1 à SK4) qui peuvent être chacun actionnés dans deux positions engagée (S1 à S8) ainsi que dans une position neutre.

18. Boîte de vitesses à double embrayage selon l'une quelconque des revendications 1 à 16, **caractérisée en ce que** pour la réalisation de sept marches avant (V1 à V7) et au moins une marche arrière (R1 à R3) il est prévu quatre embrayages (SK1 à SK4) dont trois peuvent être chacun actionnés dans deux positions engagées (S1, S2, S3, S4, S6, S7) ainsi que dans une position neutre et un autre embrayage peut être actionné dans une position engagée (S5) et une position neutre.

19. Boîte de vitesses à double embrayage selon l'une quelconque des revendications précédentes, **caractérisée en ce que** les sept marches avant (V1 à V7), au moins une marche arrière (R1 à R3) et exclusivement quatres plans d'embrayage (SKE1 à SKE4) sont prévus.

20. Boîte de vitesses à double embrayage selon l'une quelconque des revendications précédentes, **caractérisée en ce qu'**un changement de vitesse entre deux marches avant (V1, V2 sur la figure 2) adjacentes peut être réalisé en désaccouplant au maximum un embrayage (SKE3) ou en enclenchant un autre embrayage.

21. Boîte de vitesses à double embrayage selon l'une quelconque des revendications précédentes, **caractérisée en ce qu'**un embrayage (SK4) se trouvant dans un rapport (marche avant V2 dans l'alternative de la première forme de réalisation) à l'extérieur du flux de puissance établit une liaison solidaire en rotation entre deux éléments de transmission (arbre interne 16, pignon 29 dans figure 1).

22. Boîte de vitesses à double embrayage selon la revendication 21, **caractérisée en ce que** ledit embrayage (SK4) dans un rapport (marche avant V3 dans l'alternative de la première forme de réalisation) suivant séquentiellement ledit rapport (marche avant V2 dans l'alternative de la première forme de réalisation) se trouve à l'intérieur du flux de puissance.

23. Procédé de changement de vitesse dans une boîte de vitesses à double embrayage selon l'une quelconque des revendications précédentes, **caractérisé en ce que** pour un changement de vitesse séquentiel d'un rapport source (V1 dans la figure 2) à un rapport cible (V2 dans la figure 2) est actionné tout au plus un embrayage.

24. Procédé de changement de vitesse dans une boîte de vitesses à double embrayage selon la revendication 23, **caractérisé en ce qu'**un embrayage (SK4 dans V2 de l'alternative de la première forme de réalisation) se trouvant dans le rapport source (V1 dans la figure 2) dans le flux de puissance et dans le rapport cible (V2 dans la figure 2) à l'extérieur du flux de puissance reste dans le rapport cible (V2 dans la figure 2) après le changement de vitesse dans la position engagée (S7).
